(19) Europäisches Patentamt
European Patent Office
Office européen des brevets

(11) **EP 1 805 979 B1**

(12) **EUROPÄISCHE PATENTSCHRIFT**

(45) Veröffentlichungstag und Bekanntmachung des Hinweises auf die Patenterteilung:
**19.06.2019  Patentblatt 2019/25**

(21) Anmeldenummer: **05808238.9**

(22) Anmeldetag: **28.10.2005**

(51) Int Cl.:
*H04N 1/028* [(2006.01)]   *G01J 3/447* [(2006.01)]
*G01J 3/46* [(2006.01)]

(86) Internationale Anmeldenummer:
**PCT/EP2005/011591**

(87) Internationale Veröffentlichungsnummer:
**WO 2006/045620 (04.05.2006 Gazette 2006/18)**

(54) **VERFAHREN ZUR KORREKTUR VON BILDMESSWERTEN**

METHOD FOR CORRECTING MEASURED IMAGE VALUES

PROCEDE DE CORRECTION DE VALEURS MESUREES D'IMAGES

(84) Benannte Vertragsstaaten:
**CH DE FR GB IT LI**

(30) Priorität: **28.10.2004  EP 04025620**
**16.02.2005  CH 264052005**

(43) Veröffentlichungstag der Anmeldung:
**11.07.2007  Patentblatt 2007/28**

(73) Patentinhaber: **X-Rite Switzerland GmbH**
**8105 Regensdorf (CH)**

(72) Erfinder:
• **EHBETS, Peter**
  **CH-8046 Zürich (CH)**
• **KOHLBRENNER, Adrian**
  **CH-8800 Thalwil (CH)**
• **AMMETER, Harald**
  **CH-8003 Zürich (CH)**

(74) Vertreter: **SSM Sandmair**
**Patentanwälte Rechtsanwalt**
**Partnerschaft mbB**
**Joseph-Wild-Straße 20**
**81829 München (DE)**

(56) Entgegenhaltungen:
**EP-A- 1 094 309        EP-A- 1 154 247**
**DE-A1- 19 650 223      US-A- 4 449 147**
**US-A- 4 575 249        US-A- 5 554 432**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Korrektur von mittels einer bildpunktweise arbeitenden fotoelektrischen Bildmesseinrichtung ermittelten Bildmesswerten eines Messobjekts gemäss dem Oberbegriff des unabhängigen Anspruchs 1.

Farb- und Dichtemesswerte von Druckbögen werden heute oft schon mit einer mehrkanaligen, parallelisierten Messtechnik erfasst. Eine mehrkanalige, parallelisierte Messtechnik wird im Folgenden als Bildmesstechnik bezeichnet, da sie typischerweise zur bildpunktweisen Erfassung der Messdaten eines ganzen Bildes oder eines Bildausschnitts verwendet wird. Dem Vorhandensein von Bildmesswerten kommt im Zeitalter digitaler Arbeitsabläufe und der direkten Verwendung digitaler Daten aus der Vorstufe für die Druckmaschinensteuerung immer grössere Bedeutung zu. Bildmesswerte erlauben eine effiziente Qualitätskontrolle des Druckprodukts und werden auch für die Farbkontrolle und Farbregelung im Bild verwendet.

Die (bildpunktweise) Erfassung von Bildmesswerten kann mit bekannten Techniken durchgeführt werden. Eine bekannte Möglichkeit ist die Kameramesstechnik. Sie wird in Rollendruckmaschinen, in digitalen Druckmaschinen und auch in Bogen-Offsetdruckmaschinen zur Qualitätsüberwachung eingesetzt. Bekannt sind Zeilenkameras, bei der sequentiell eine Bildzeile nach der anderen parallel erfasst wird. Alter-nativ kommen auch zwei-dimensionale Kamerasysteme zum Einsatz, welche parallel ein beschränktes zweidimensionales Bildfeld erfassen und grössere Bildflächen aus mehreren Messungen mit mechanischem Versatz zusammensetzen. Beispiele für Kameramesstechnik in der Druckmaschine sind die Produkte der Firma Eltromat GmbH. Als besonderes Beispiel kann die Patentanmeldung EP1213569A2 genannt werden, welche ein Kamerasystem beschreibt, das speziell für die Farbmesstechnik ausgelegt ist.

Als alternative Bildmesssysteme können handelsübliche Scanner verwendet werden, bei denen der Druckbogen auf einer Auflage von einem Messbalken sequentiell abtastet wird. Als einfachste Realisierung kann die Messeinheit eines kommerziellen Flachbett-Scanners verwendet werden. Eine bessere Qualität der Messdaten erhält man, wenn ein spezifisch für die Farbmessung optimiertes System eingesetzt wird. Solche Systeme sind zum Beispiel im Patent US-A 6,028,682 ($\approx$ DE-A 196 50 223) oder in der hier vorliegenden Patentanmeldung beschrieben.

Die Verwendung der Bildmesswerte für Farbanwendungen oder Dichtemessungen erfordert, dass die Bildmesswerte in die entsprechenden Grössen umgewandelt werden können. Die Umrechnung wird als farbmetrische Kalibration bezeichnet und kann nach bekannter Art durchgeführt werden. Eine farbmetrische Kalibration von Bildmessgeräten ist zum Beispiel in der Publikation Jon Y. Hardeberg, Acquisition and Reproduction of Color Images, Colorimetric and Multispectral Approaches, Dissertation.com, 2001, ISBN 1-58112-135-0 beschrieben. Vorzugsweise wird mittels einer Ausgleichsrechnung anhand von Referenzmesswerten eine Korrekturmatrix bestimmt, welche die Bildmesswerte in die gewünschte Einheiten (Normfarbwerte CIE XYZ oder Dichtefilterwerte) transformiert.

Die Bildmesswerte liegen typischerweise als RGB-Werte, Multi-Filter-Messwerte (mehr als 3 Messwerte pro Bildpixel) oder als spektrale Messdaten (pro Bildpunkt bzw. Pixel) vor. Die farbmetrische Messgenauigkeit des Systems wird in der Regel erhöht, je mehr verschiedene spektrale Messwerte pro Bildpixel vorhanden sind oder je genauer die Filterfunktionen des Messsystems an die gewünschten Auswertungsfilter (zum Beispiel die farbmetrischen Normalbeobachter-Funktionen oder die Dichtefilterfunktionen) angepasst sind.

Die farbmetrische Kalibration alleine ist aber nicht ausreichend für die Anwendung der Bildmesstechnik im Druckumfeld. Die Messleistungsfähigkeit des Systems wird auch durch Prozessparameter des Druckverfahrens und Abhängigkeiten in Funktion des Druckmediums beeinflusst.

Ein Problem ist die bekannte Nass-Trocken Problematik, welche vor allem im Offset-Druckverfahren Schwierigkeiten für die Messtechnik verursacht. Der Drucker muss die Druckqualität während des Druckbetriebs prüfen können. Zu diesem Zeitpunkt ist der Farbauftrag aber noch frisch. Die Farbschicht auf dem Substrat ist nass und besitzt einen starken Glanz. Während des Trocknungsprozesses nimmt die Farbschicht die Struktur der Substratoberfläche an, was den Glanz verringert und vor allem für matte Papiere deutliche zeitliche Änderungen der Messwerte (während der Trocknungsphase) verursacht.

Der Unterschied zwischen an nassem und trockenem Substrat ermittelten Messwerten kann mit dem an sich bekannten Polarisationsfilter-Messverfahren reduziert werden. Bei diesem Messverfahren wird die Probe mit polarisiertem Licht beleuchtet, und im Sammelkanal wird ein zur Polarisationsrichtung des Beleuchtungslichts orthogonaler Polarisationsfilter als Analysator verwendet. Die orthogonalen Polarisationsfilter eliminieren die Komponente im Messlicht, welche von der Oberfläche reflektiert wird und den variablen Teil ausmacht.

Die Polarisationsfilter-Messtechnik wird hauptsächlich für die Dichtemessung verwendet und wird in den handelsüblichen Handmessgeräten, wie zum Beispiel dem Spektralphotometer SpectroEye der Firma GretagMacbeth, angeboten. Die Polarisationsfilter-Messtechnik hat bis jetzt keine Anwendung in bildgebenden Farbmesssystemen für die Druckprozesskontrolle gefunden. Die Ursache dafür ist, dass Prozesskontrolsysteme schnell messen müssen und die orthogonalen Polarisationsfilter einen Lichtverlust von einem Faktor 8 bis 10 verursachen, der durch entsprechend längere Messzeiten ausgeglichen werden müsste, was wiederum für die Druckprozesskontrolle zu langsam wäre. Aus diesem Grund sind Bildmesssysteme, wie sie z.B. in Patent US-A 6,028,682 (≈ DE-A 196 50 223) beschrieben sind, ohne Polarisationsfilter ausgerüstet. Die Polarisationsfiltermesstechnik ist zum Beispiel in der Publikation F. Mast und T. Celio (Gretag), Die Polarisation in der Remissionsdensitometrie, Fogra-Densitometer-Symposium, 1979 beschrieben.

In vielen Anwendungen besteht aber die Forderung, dass das Messsystem Dichtewerte gemäss Polarisationsfilter-Messtechnik ausgeben können muss. Ausserdem bietet die Polarisationsfilter-Messtechnik auch für die farbmetrische Charakterisierung von Proben mit hohen Dichten, wie sie zum Beispiel bei hochpigmentierten Farben auftreten, eine bessere Linearität der Messwerte in Funktion von Schichtdickenänderungen. Die Polarisationsfilter-Messtechnik würde somit auch eine verbesserte farbmetrische Regelung des Farbauftrags der Druckmaschine ermöglichen.

In bekannten Messsystemen, wie in Patent US-A 6,028,682 (≈ DE-A 196 50 223) beschrieben, werden Polarisationsfilter-Dichtewerte mit einem Korrekturmodell aus den Messwerten ohne Polarisationsfilter berechnet. Das Korrekturmodell funktioniert mit festen Parametern. Als Eingangsvariable für das Modell kann der Drucker nur zwischen einer begrenzten Anzahl von Papierqualitäten (Substraten) auswählen. Für diese Papierqualitäten wurden die entsprechenden Korrekturparameter vorgängig experimentell bestimmt. Das Korrekturmodell entspricht in seiner einfachsten Form der Subtraktion eines Offsetwertes vom ohne Polarisationsfilter gemessenen Remissionswert. Die dabei erreichte Qualität der Korrektur ist jedoch nicht zufriedenstellend. Die Genauigkeit der Korrektur wird durch die Vielzahl von verschiedenen Drucksubstraten mit unterschiedlichen Oberflächeneigenschaften limitiert. Das begrenzte Set von typischen Papierqualitäten kann diese Vielfalt nicht nachbilden. Ausserdem ist das Modell mit der Offset-Korrektur besonders ungenau für die Anwendung auf hohen Dichten, und zudem ist die Implementierung nicht ausreichend parametrisiert für die Anwendung auf spektrale oder farbmetrische Messwerte. Messwerte im Absorptionsbereich, in den Flanken oder im Transmissionsbereich eines Spektrums zeigen unterschiedliche Differenzen zwischen Messungen mit und ohne Polarisationsfilter, was ein komplexeres Korrekturmodell verlangt.

Die unterschiedlichen Oberflächeneigenschaften der Druckproben verursachen auch eine Problematik für die Messgeometrie. Der Einfluss der Messgeometrie ist zum Beispiel in der Publikation Fogra Forschungsbericht Nr, 6.201, Einfussgrössen bei der densitometrischen Ermittlung der Tonwertveränderung im Offsetdruck, Dipl. Ing. Helmut Wordel, 1983 beschrieben. In der Bildmesstechnik können aus verschiedenen Gründen die in der Farbmesstechnik vorgeschriebenen Messwinkel (i.e. 45°/0°-Messgeometrie) oft nicht genügend genau eingehalten werden. Die Winkelabweichungen verursachen Differenzen in den Messwerten gegenüber einem Farbmessgerät mit Normgeometrie. Die Differenzen der Messwerte sind aber zudem noch abhängig von der verwendeten Papierqualität. Einmalige Charakterisierung der Messunterschiede bei der Herstellung des Geräts und eine entsprechende fest programmierte Korrektur ist daher nicht ausreichend für die anschliessende Anwendung mit verschiedenen Substraten (Papierqualitäten).

Ein weiteres Problem ergibt sich daraus, dass Bildmesssysteme oft zeilenorientiert aufgebaut sind, wie zum Beispiel das in der US-A 6,028,682 (≈ DE-A 196 50 223) beschriebene System. In diesem Fall kann aus geometrischen Gründen nur aus einer Winkelrichtung beleuchtet werden. Diese Einschränkung führt auf Proben mit einer rauhen Oberfläche zu richtungsabhängigen Messfehlern je nachdem, wie die Probe unter dem Messgerät orientiert ist. Die richtungsabhängigen Farbdifferenzen können auf Naturpapier grösser als dE*ab = 5 und die entsprechenden Dichteabweichungen grösser als 10% sein. Diese Toleranzen sind für viele Anwendungen inakzeptabel oder zumindest sehr störend.

Die EP 1 094 309 A beschreibt eine Messvorrichtung für die Qualitätskontrolle von Druckprodukten, mit einem Beleuchtungskanal zur Ausleuchtung einer Messstelle, mit einem das von der Messstelle remittierte Licht aufnehmenden Remissionskanal, einer nachgeschalteten und die remittierte Strahlung spektral analysierenden Bewegungseinheit sowie im Beleuchtungs- und/oder Remissionskanal angeordneten Pol-Filtern. Eine solche Messvorrichtung kann derartig erweitert werden, so dass bei vertretbarem messtechnischen Bauaufwand die Zahl die mit der Messvorrichtung gewinnbaren Messwerte sowie die Möglichkeiten der Weiterverarbeitung erhöht werden kann. Dies geling dadurch, dass ein Beleuchtungskanal ohne und ein Beleuchtungskanal mit Pol-Filter zur Beaufschlagung von Messstellen ohne und mit polarisierter Strahlung vorgesehen ist, und dass den Beleuchtungskanälen jeweils ein Remissionskanal ohne und ein Remissionskanal mit einer Einrichtung zur Polarisation des von den Messstellen remittierten Lichtes zugeordnet ist.

Ausgehend von diesem Stand der Technik soll durch die vorliegende Erfindung eine Lösung für diese bekannten Problematiken geboten und ermöglicht werden, eine einfach gestaltete Bildmesstechnik oder irgendein einfach gestaltetes Farbmesssystem für die qualifizierte Prozess- und Farbkontrolle während des Druckbetriebs zu verwenden und dabei störende Medien- und Geometrieabhängigkeiten zu reduzieren.

Konkreter soll durch die vorliegende Erfindung eine grundlegende Verbesserung für die Korrektur der Bildmesswerte auf Messwerte gemäss Polarisationsfilter-Messtechnik ermöglicht werden. Die Korrektur soll nicht nur für die Dichtewerte, sondern für das ganze Remissionsspektrum anwendbar sein. Ausserdem sollen zusätzliche Messunterschiede, welche durch Abweichungen in der Messgeometrie oder durch die Beleuchtungsanordnung verursacht werden, kompensiert werden.

Die Lösung dieser der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche.

Gemäss dem allgemeinsten Gedanken der Erfindung werden die Korrekturen mit einem parametrisierbaren Modell implementiert, bei welchem die im Modell verwendeten Korrekturparameter anhand von Referenzmesswerten auf dem gleichen Medium (Substrat) vorzugsweise automatisch und ohne zusätzliche Eingabe bestimmt werden.

Im folgenden wird die Erfindung anhand der Zeichnung näher erläutert. Es zeigen:

Fig. 1     eine vereinfachte Gesamtansicht einer für die Erfindung besonders gut geeigneten Abtastvorrichtung,

Fig. 2     einen teilweisen Längsschnitt parallel zur Koordinatenebene y-z durch den Messwagen der Abtastvorrichtung,

Fig. 3     einen teilweisen Längsschnitt parallel zur Koordinatenebene x-y durch den Messwagen der Abtastvorrichtung,

Fig. 4     eine Skizze des grundsätzlichen Aufbaus der im Messwagen angeordneten Messeinrichtung,

Fig. 5     ein Flussdiagram für die Korrektur der Messdaten in Bezug auf medienabhängige und messgeometrische Einflüsse sowie Fluoreszenzeffekte mit einem parametrisierten Modell gemäss der Erfindung,

Fig. 6     ein Flussdiagramm für die Bestimmung der Korrekturparameter für die Korrektur von medienabhängigen und messgeometrischen Einflussgrössen,

Fig. 7     ein Flussdiagramm zur Verdeutlichung des parametrisierten Modells für die Umrechnung der unpolarisierten Bildmesswerte in polarisierte Messwerte und

Fig. 8     ein Flussdiagramm zur Verdeutlichung der Berechnung der Parameter des parametrisierten Modells für die Umrechnung von unpolarisierten in polarisierte Messwerte.

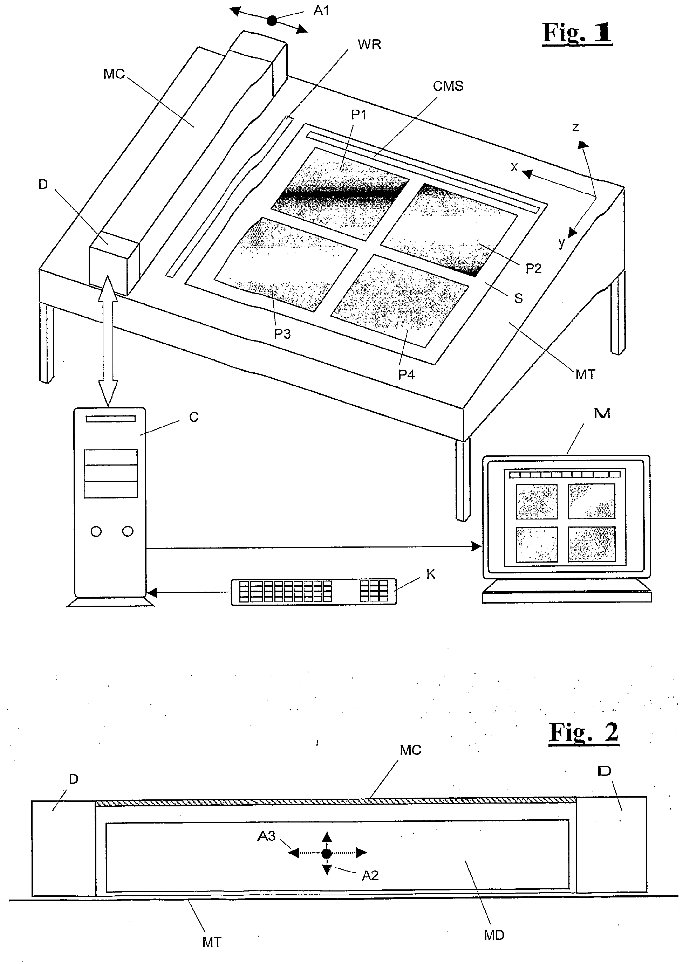

Die Figuren 1-4 zeigen eine bevorzugte Realisierung der Abtastvorrichtung. Sie entspricht in ihrem generellen Aufbau den üblichen Messapparaturen, wie sie z.B. in der grafischen Industrie typischerweise zur punktweisen fotoelektrischen Ausmessung von einem Druckprozess entnommenen Druckbögen verwendet werden. Solche Druckbögen werden im folgenden gleichwertig auch als Messobjekt oder Probe bezeichnet.

Die Abtastvorrichtung umfasst einen Unterbau in Form eines Messtischs MT mit üblicherweise geneigter rechteckiger Oberfläche, auf der das Messobjekt S - der auszumessende Druckbogen - positioniert werden kann. Der Druckbogen S enthält typischerweise einige (hier beispielsweise vier) grafische Darstellungen P1-P4 und einen (oder mehrere) Farbmessstreifen CMS. Zur Positionierung des Messobjekts S sind am Messtisch MT nicht dargestellte Anschläge vorgesehen. Die Fixierung des Messobjekts S auf dem Messtisch MT erfolgt vorzugsweise auf elektrostatischem Wege oder mittels bekannter Saugmechanismen. Auf dem Messtisch MT ist ein länglicher Messbalken bzw. Messwagen MC angeordnet, auf bzw. in dem sich eine Messeinrichtung MD (Fig.2) befindet. Der Messwagen MC erstreckt sich über die Tiefe des Messtischs MT in Koordinatenrichtung y und ist motorisch über dessen Breite in Koordinatenrichtung x linear hin und her beweglich, wobei entsprechende Antriebs- und Steuereinrichtungen am Messwagen MC und am bzw. unter dem Messtisch MT vorgesehen sind. Die Antriebseinrichtung ist in der Zeichnung nur symbolisch durch das Bezugszeichen D angedeutet, die Beweglichkeit des Messwagens MC in x-Richtung durch den Pfeil A1. Innerhalb des Messwagens MC ist die eigentliche Messeinrichtung MD mittels nicht dargestellter konventioneller Antriebseinrichtungen in Richtung der Koordinatenachse z relativ zur Messtischoberfläche heb- und senkbar und in bestimmten Ausführungsvarianten ausserdem noch in Richtung der Koordinatenachse y (beschränkt) verfahrbar. Diese beiden Bewegungsmöglichkeiten sind in Fig. 2 durch die Pfeile A2 und A3 symbolisiert.

Auf dem Messtisch MT befindet sich parallel zum Messwagen MC eine Weissreferenz WR. Diese dient der Kalibrierung der Messeinrichtung MD. Die Kalibrierung wird typischerweise vor jedem Messlauf durchgeführt, indem die Messeinrichtung MD die Weissreferenz ausmisst. Die Weissreferenz wurde zuvor (typischerweise im Werk) mit Hilfe eines externen Gerätes ausgemessen und die Messwerte im Speicher der Abtastvorrichtung, in der Regel im Rechner C, hinterlegt. Eine solche Kalibrierung ist bei Spektralphotometern üblich und als solche Stand der Technik.

Die Abtastvorrichtung umfasst ferner noch eine Verarbeitungseinrichtung in Form eines (ev. auch externen) Rechners C mit einer Tastatur K und einem Farbmonitor M. Der Rechner C arbeitet mit einer hier nicht dargestellten Mess- und Antriebssteuerung am Messtisch MT bzw. im Messwagen MC zusammen und verarbeitet die von der im Messwagen MC befindlichen Messeinrichtung MD erzeugten und ihm über die Mess- und Antriebssteuerung MDC zugeführten Messsignale, wobei er unter anderem auch die Bildinformation des abgetasteten Messobjekt S auf dem Monitor M darstellen kann. Der Rechner C kann über die Mess- und Antriebssteuerung ferner auch die Bewegungen des Messwagens MC und der darin befindlichen Messeinrichtung MD veranlassen und steuern. Die Abtastvorrichtung entspricht soweit dem bekannten Stand der Technik, wie er z.B. durch kommerziell erhältliche Geräte der Firma Heidelberger Druckmaschinen AG oder durch die US-A 6,028,682 (entsprechend DE-A- 196 50 223) gegeben ist. Der mechanische Aufbau und die Realisierung der motorischen Verfahrbarkeit von Messwagen MC und Messeinrichtung MD sind in der US-A 6,028,682 detailliert beschrieben, so dass der Fachmann diesbezüglich keiner weiteren Erläuterung bedarf. Es versteht sich, dass der Messwagen MC auch parallel zur Koordinatenrichtung x angeordnet sein kann, wobei dann alle anderen Ausrichtungen und Bewegungsrichtungen sinngemäss ebenfalls um 90° gedreht wären.

Die im Messwagen MC befindliche Messeinrichtung MD umfasst als wesentlichste Bestandteile eine Beleuchtungseinrichtung zur Beaufschlagung des Messobjekts mit Beleuchtungslicht, Aufpickoptikmittel zum Auffangen des vom Messobjekt remittierten Messlichts und eine wellenlängenbereichselektive fotoelektrische Empfängereinrichtung zur Umwandlung des remittierten Messlichts in elektrische Messsignale. Diese Elemente dienen zur bildpunktweisen Abtastung des gesamten Druckbogens und werden im folgenden gesamthaft als Bildmesseinheit bezeichnet.

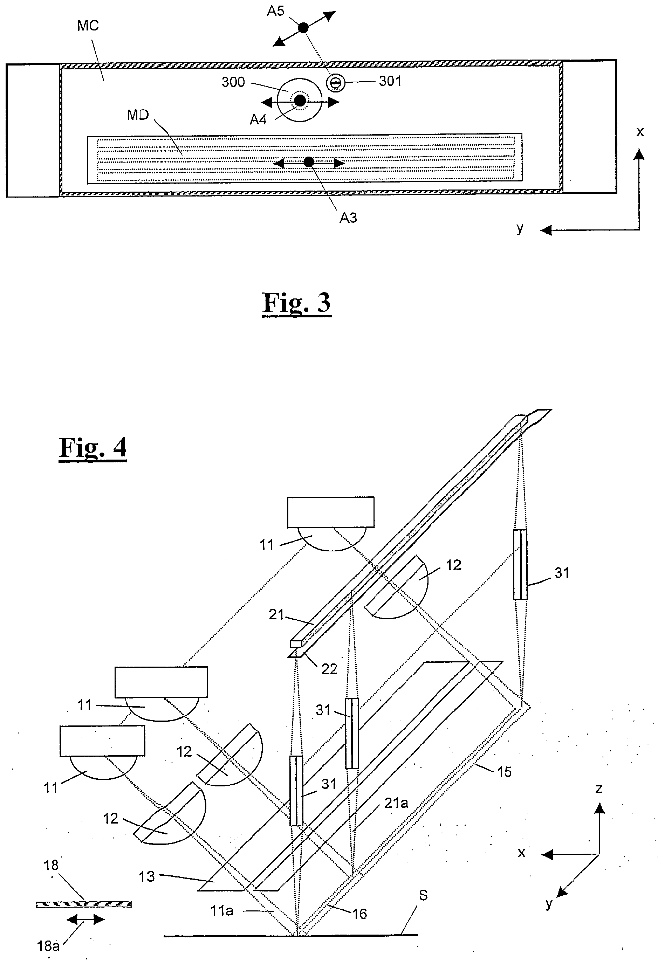

Die Messeinrichtung MD ist zusätzlich zur erwähnten Bildmesseinheit noch mit einem unabhängigen Spektralmesskopf für die spektrale Ausmessung einzelner Bildelemente ausgestattet, so wie dies in der Fig. 3 schematisch angedeutet ist. Dieser Spektralmesskopf 300 ist über einen in der Figur durch einen Pfeil A4 symbolisch angedeuteten motorischen Antrieb unabhängig von den übrigen Komponenten der Messeinrichtung in y-Richtung bewegbar und damit in Verbindung mit der Bewegung des Messwagens MC in x-Richtung über jedem beliebigen Bildelement des Messobjekts positionierbar. Der Spektralmesskopf 300 und sein Antrieb in y-Richtung wird selbstverständlich auch von der Mess- und Steuereinrichtung gesteuert. Der Spektralmesskopf 300 ist mit einem Polarisationsfilter 301 ausgestattet, das ferngesteuert in den Messstrahlengang eingeführt bzw. wieder aus diesem entfernt werden kann, so dass wahlweise Spektralmessungen mit und ohne Polarisationsfilter möglich sind. Die Bewegung des Polarisationsfilters 301 ist in der Fig. 3 durch einen Pfeil A5 symbolisiert. Das Polarisationsfilter 301 umfasst zwei konzentrische Teile, deren Polarisationsrichtungen zueinander gekreuzt sind. Der äussere Teil wird vom Beleuchtungsstrahlengang durchsetzt, der innere Teil vom Messlichtstrahlengang. Um Messungen mit verschiedenen Filtern zeitgleich durchführen zu können, kann auch mehr als ein unabhängiger Spektralmesskopf vorgesehen sein, um z.B. mit zwei Spektralmessköpfen Messungen mit und ohne Polarisationsfilter zu erhalten.

Der Spektralmesskopf 300 wird in der praktischen Anwendung für hochpräzise (spektrale) Messungen an relativ wenigen ausgewählten Bildelementen des Messobjekts S eingesetzt. Typischerweise wird damit der auf Druckbögen üblicherweise vorhandene Farbkontrollstreifen CMS (Fig.1) ausgemessen. Dies kann in einem eigenen Abtastdurchlauf oder aber auch zusammen mit dem oder einem der Abtastdurchläufe der Messeinrichtung MD erfolgen. In beiden Fällen ist es aufgrund der a priori nicht genau bekannten Lage von ausgewählten Bildelementen besonders vorteilhaft, die von der Messeinrichtung erfasste Bildinformation dahingehend zu interpretieren, dass diese zur Positionierung des unabhängigen Spektralmesskopfes auf spezifische Bildelemente verwendet werden kann. So kann insbesondere die genaue Lage des Farbkontrollstreifens CMS während des Messvorgangs bestimmt und damit der unabhängige Spektralmesskopf gezielt über den interessierenden Bildelementen positioniert werden.

Der spektrale Messkopf ist als qualitativ hochwertiges Farbmesssystem ausgelegt. Er erfüllt alle Anforderungen an die Messtechnik der internationalen Normen zur Farbmesstechnik (zum Beispiel ISO 13655 oder DIN 5033). Im speziellen ist der spektrale Einzelmesskopf 300 mit einer ringförmigen oder zirkularen Messgeometrie ausgelegt, so dass keine richtungsabhängigen Effekte auftreten, wenn die Probe unter dem spektralen Einzelmesskopf gedreht wird. Ein Beispiel für die Realisierung eines solchen Spektralmesskopf ist das Spektralphotometer SpectroEye der Firma GretagMacbeth AG, welches als spektraler Messkopf in der Messvorrichtung eingesetzt werden kann. Ausserdem ist es vorteilhaft, wenn der spektrale Messkopf und die Bildmesseinheit ein Beleuchtungsspektrum im Messlicht ohne ultravioletten (UV-) Anteil aufweisen. Diese Charakteristik kann erreicht werden, wenn in der Beleuchtungsoptik ein Kantenfilter eingesetzt wird, welches den spektralen Anteil im Beleuchtungsspektrum unterhalb der Wellenlänge von 400 nm unterdrückt. Für solche Filter werden handelsübliche Absorptionsfiltergläser zum Beispiel von der Firma Schott angeboten. Die Unterdrückung des UV-Anteils erleichtert die Korrektur der Messdaten, da die nichtlinearen Effekte für die unterschiedliche Anregung von optischen Aufhellern im Substrat nicht berücksichtigt werden. Wenn keine UV-Unterdrückung verwendet wird, muss eine Kompensation der Fluoreszenzeffekte der optischen Aufheller im Korrekturmodell berücksichtigt werden. Idealerweise wird diese Kompensation im erfindungsgemässen Korrekturmodell für den Einfluss der Messgeometrie und Medienabhängigkeit mitberücksichtigt. Beide Varianten sind weiter unten im Detail beschrieben. Der Spektralmesskopf 300 wird im folgenden auch als Referenzmesseinrichtung bezeichnet.

Die Fig. 4 zeigt den prinzipiellen Aufbau der Bildmesseinheit der Messeinrichtung MD. Die Messeinrichtung bildet insgesamt einen (bezüglich Wellenlängenbereichen) mehrkanaligen Zeilen-Scanner, wobei in der Fig. 4 der Übersichtlichkeit halber nur die zu einem Farbkanal (Wellenlängenbereich) gehörigen Elemente dargestellt sind. Eine vollständige Messeinrichtung MD enthält in x-Richtung zu einander parallel versetzt mehrere der in Fig. 4 gezeigten Konfigurationen. Beispielsweise kann die Messeinrichtung sechs solche Konfigurationen aufweisen.

Die Beleuchtungseinrichtung umfasst pro Farbkanal eine grössere Anzahl von Lichtquellen 11 in Form von Leuchtdioden, welche in y-Richtung linear aneinandergereiht sind. Sie umfasst ferner vorzugsweise pro Lichtquelle 11 je eine (zylindrische) Kollimatorlinse 12 sowie eine durchgehende, sich in Längsrichtung parallel zur y-Koordinate erstreckende Schlitzblende 13. Die Lichtquellen 11 beaufschlagen das Messobjekt S innerhalb eines in Längsrichtung parallel zur y-Koordinate verlaufenden und sich wenigstens über einen Teil des Messobjekts S erstreckenden Beleuchtungsstreifens 15 mit Beleuchtungslicht. Die Anordnung ist dabei so getroffen, dass jedes innerhalb des Beleuchtungsstreifens 15 liegende abzutastende Bildelement des Messobjekts S unter einem definierten, für die Farbmessung geeigneten Einfallswinkel (typischerweise 45°/0°, z.B. DIN 165361, Teil 2) mit Beleuchtungslicht beaufschlagt wird. Dies wird durch die Kollimatorlinsen 12 und die Schlitzblende 13 erreicht. Die Kollimatorlinsen 12 erzeugen einen nahezu parallelen Strahlengang. Die Brennweite der Linsen ist so gewählt, dass der Divergenzwinkel des kollimierten Strahlengangs (in y-Richtung) kleiner gleich 5-10° ist. Diese Implementierung ermöglicht eine weitgehend uniforme durchgehende Linienbeleuchtung. Der Beleuchtungsstrahlengang ist in Fig. 4 mit 11a bezeichnet. Die Schlitzblende 13 begrenzt den Einfallswinkel quer zur Längserstreckung des Beleuchtungsstreifens, also in Richtung der x-Achse. Für die Leuchtdioden 11 kann beispielsweise der "weiss" strahlende Typ Luxeon DS 25 der Firma Lumileds Lighting LLC, San Jose, CA, USA eingesetzt werden.

Die fotoelektrische Empfängereinrichtung umfasst (pro Farbkanal) einen Zeilensensor 21 und einen vorgeschalteten Farbfilter 22, welcher den Zeilensensor auf seinen Wellenlängendurchlassbereich sensibilisiert. Der Zeilensensor besteht aus einem oder mehreren sog. CIS-Elementen (contact image sensor), die wiederum je auf einem Chip in einer geraden Zeile integriert eine grosse Anzahl von einzelnen Lichtsensoren enthalten. Ein geeignetes CIS-Element ist z.B. der Typ PI6045J der Firma Peripheral Imaging Corporation, San Jose, CA, USA mit einer Auflösung von 600 dpi.

Die Aufpickoptikmittel umfassen (pro Farbkanal) eine linienförmige Optikanordnung 31, die vorzugsweise durch eine im wesentlichen lineare Anordnung von Gradientenindex-Linsen, sog. Selfoc-Linsen-Arrays, implementiert ist. Die linienförmige Optikanordnung 31 erstreckt sich wie der Zeilensensor 21 parallel zur y-Koordinatenrichtung. Bei einem typischen, kommerziell erhältlichen Aufbau eines Selfoc-Linsen-Arrays 31 befinden sich zwei Reihen von Gradientenindex-Linsen zwischen zwei äusseren Wänden, wobei die Zwischenräume zwischen den Linsen-Fasern und den Wänden mit einem opaken Kunststoff vergossen sind. Geeignete Selfoc-Linsen-Arrays werden von der Firma NSG vertrieben.

Die lineare Optikanordnung 31 lenkt das von den mit Beleuchtungslicht beaufschlagten Bildelementen des Messobjekts S remittierte Messlicht auf den zugeordneten. Zeilensensor 21 (Messlichtstrahlengang 21a). Die Optikanordnung 31 ist dabei so ausgebildet und angeordnet, dass sie aus jedem abgetasteten Bildelement das remittierte Messlicht nur unter einem definierten, für Farbmessungen geeigneten Ausfallswinkelbereich auffängt (typischerweise 0° +/- 5°, z.B. DIN 165361, Teil 2). Die (pro Farbkanal) abgetastete Bildelementzeile ist in Fig. 4 mit 16 bezeichnet.

Für die Praxis ist es wichtig, dass die Schlitzblende 13 im Beleuchtungsstrahlengang möglichst nah am Messobjekt S positioniert ist. Die Schlitzblende 13 begrenzt die ausgeleuchtete Fläche auf dem Messobjekt. Sie hat typischerweise eine Öffnungsbreite von 1 mm oder kleiner. Die beleuchtete Fläche des Messobjekts (Beleuchtungsstreifen 15) hat dadurch eine Breite (in x-Richtung), welche kleiner als das Sichtfeld der Optikanordnung bzw. Selfoc-Linsen-Arrays 31 (in x-Richtung) ist. Dies verbessert die Streulichtunterdrückung und ermöglicht Dichtemessungen von kleinen Messfeldern mit hoher Dichte in weissem Umfeld.

Ein grundsätzliches Problem der Linienbeleuchtung besteht darin, dass ein Punkt im Messfeld Licht von allen Lichtquellen (Leuchtdioden) erhält. Dabei trifft das Licht von längs der Linie versetzten Leuchtdioden nicht mehr mit 45°, sondern mit grösseren Winkeln auf das Messfeld. Die grösseren Winkel verstossen aber gegen die normierte Farbmessgeometrie, welche nur Beleuchtungswinkel im Bereich 40° bis 50° (45°+/-5°) zulässt. Abweichungen von der Normgeometrie verursachen Messfehler, welche durch einen unterschiedlichem Oberflächeneffekt und durch andere Absorptionswege durch die Farbschicht verursacht werden.

Der effektive Beleuchtungswinkelbereich muss deshalb eingeschränkt werden. Dies kann z.B. mittels einer Lamellenstruktur realisiert werden, welche zwischen den einzelnen Leuchtdioden einer Linie und dem Messfeld angeordnet ist. Die Lamellen dürfen aber nicht zu gross sein, weil sonst relativ viel Licht verloren geht. Jeder Messpunkt sieht nur das Licht einer einzigen LED im zulässigen Winkelbereich.

Eine verbesserte Möglichkeit zur Begrenzung der Beleuchtungswinkel gemäss den Anforderungen der Normgeometrie wird durch den Einsatz der schon erwähnten Kollimatorlinsen 12 erreicht, welche längs jeder Leuchtdioden-Linienquelle vorgesehen und vorzugsweise körperlich zu Linsen-Arrays zusammengefasst (mehrere Linsen aus einem einzigen Kunststoffteil) sind.

Jede Kollimatorlinse 12 eines Linsen-Arrays kollimiert das Licht von hauptsächlich einer Leuchtdiode 11 (oder, bei Verwendung von vielen kleinen Leuchtdioden-Chips, einer räumlich begrenzten Anordnung von mehreren Leuchtdioden-Chips). Die Brennweiten der Kollimatorlinsen 12 sind so gewählt, dass der Divergenzwinkel und die Randwinkel der Beleuchtung des Messfeld in Längsrichtung der Leuchtdioden-Linie (y-Richtung) kleiner als +/- 10° sind. Auf diese Weise wird innerhalb des Be-leuchtungsstreifens 15 eine Überlappung und eine homogene Beleuchtungsstärke verteilung erzielt. Die schon erwähnten Blendenlamellen zwischen den Leuchtdioden 11 verhindern, dass Licht einer Leuchtdiode via Linsen einer Nachbar-Leuchtdiode auf das Messobjekt gelangen kann.

Es ist ausreichend, wenn für die Kollimatorlinsen 12 Zylinderlinsen eingesetzt werden, welche die Lichtstrahlen in Längsrichtung der Leuchtdioden-Linie kollimieren. Die Leuchtdioden-Linienlichtquelle hat in der Richtung senkrecht zur Linie eine begrenzte Ausdehnung, so dass in dieser Dimension die Anforderungen der Normgeometrie auch ohne zusätzliche Optik erfüllt sind. Ausserdem begrenzt die Schlitzblende 13 die Breite des Beleuchtungsstreifens 15.

Die Abtastung eines Messobjekts, speziell eines Druckbogens, muss kontaktlos erfolgen. Die Auflagefläche des Bogens ist über die relativ grosse Bogenfläche in der Regel nicht perfekt eben. Es treten deshalb beim Abtasten Abstandsänderungen zwischen dem Messobjekt und der Messeinrichtung auf. Diese dürfen die Messwerte nicht beeinflussen. Dies erfordert, dass die Beleuchtungs- und die Messoptik über den tolerierten Bereich von ein paar Zehntelmillimeter abstandsunabhängig sein müssen.

Das Sichtfeld der Messoptik (Optikanordnung 31) wird von der Beleuchtung überleuchtet (der Beleuchtungs streifen 15 ist breiter als die Breite der von der Optikanordnung 31 erfassten Abtastlinie 16). Da die Erfassungswinkel der Optikanordnung 31 sehr eingeschränkt sein müssen (gemäss den Farbmessnormen sind nur Erfassungswinkel von +/- 5° tolerierbar), wird mit der Optikanordnung die Leucht- oder Strahldichte im Messfeld gemessen, welche unabhängig vom Abstand ist. Die Beleuchtung muss also nur eine konstante, vom Abstand unabhängige Bestrahlungsstärke erzeugen.

Für eine abstandsunabhängige Beleuchtung unter 45° ist bereits ein Konzept bekannt, bei welchem eine Strahlungsquelle mit Lambertscher Abstrahlcharakteristik parallel zur Ebene des Messfelds angeordnet wird. Die Position der Strahlungsquelle relativ zum Messfeld wird so gewählt, dass das Licht im Winkel von 45° auf das Messfeld trifft. Gemäss dem photometrischen Grundgesetz wird so eine Abstandsunempfindlichkeit über einen für die Praxis ausreichend grossen Abstandsvariationsbereich realisiert. Dieses an sich bekannte Konzept ist, wie aus der Fig. 4 erkennbar, auch bei der hier beschriebenen Abtastvorrichtung angewandt.

Zur Ausmessung des Messobjekts in mehreren Farbkanälen ist die Messeinrichtung MD, wie schon erwähnt, mit mehreren Konfigurationen gemäss Fig. 4 ausgestattet. Diese Konfigurationen (Lichtquellen 11, Kollimatorlinsen 12, Schlitzblende 13, Zeilensensor 21, Farbfilter 22, lineare Optikanordnung 31) sind parallel zu einander in geringem gegenseitigen Abstand (in x-Richtung) angeordnet und unterscheiden sich lediglich durch unterschiedliche Farbfilter 22.

Die linearen Optikanordnungen 31 und die Zeilensensoren 21 der einzelnen Farbkanäle sind in x-Richtung gegeneinander versetzt. Deshalb empfängt jeder der Zeilensensoren 21 zu einem gegebenen Zeitpunkt Messlicht aus unterschiedlichen, in y-Richtung verlaufenden Bildelementzeilen 16 des Messobjekts S. Durch Bewegen des Messwagens MC und damit der Messeinrichtung MD in x-Richtung über das Messobjekt S werden aber alle Zeilensensoren 21 zeitlich sequentiell mit Messlicht aus allen Bildelementzeilen 16 des Messobjekts S beaufschlagt. Wenn die Messeinrichtung MD an einer Druckmaschine montiert ist, ergibt sich die Relativbewegung zwischen Messeinrichtung und Messobjekt durch den unter der Messeinrichtung durchlaufenden Druckbogen.

Es versteht sich, dass mit zunehmender Anzahl von Farbkanälen (auf unterschiedliche Wellenlängenbereiche sensibilisierten Zeilensensoren) und gleichzeitig abnehmender Bandbreite der Wellenlängenbereiche eine zunehmend präzisere Farbmessung möglich ist. Bei 14-16 Farbkanälen im Abstand von je 20 nm ist die spektrale Auflösung gleich derjenigen klassischer Spektralmessköpfe. Mit zunehmender Anzahl von Farbkanälen steigt aber auch der konstruktive Aufwand und der Rechenaufwand für die Verarbeitung der Messwerte. Umgekehrt ist bei einer zu geringen Anzahl von Farbkanälen keine für die anvisierten Einsatzzwecke ausreichend präzise Farbmessung mehr möglich. Ein optimaler Kompromiss bez. Messgenauigkeit und Herstellkosten liegt gemäss einem Aspekt der Erfindung bei 6-12 Farbkanälen im sichtbaren Bereich plus ev. einem zusätzlichen Kanal im nahen Infrarot-Bereich.

Die Figuren 1-4 zeigen eine bevorzugte Realisierung der Abtastvorrichtung. Für die Zwecke der vorliegenden Erfindung sind aber auch andere Messkonfigurationen geeignet. Im Messwagen MC kann zum Beispiel nur der spektrale Messkopf angeordnet sein. Die Bildmesseinheit kann direkt in der Druckmaschine eingebaut sein, wie zum Beispiel in den bekannten "Webinspection" Systemen. Alternativ kann der Messwagen nur die Bildmesseinheit beinhalten oder - äquivalent - die Bildmesseinheit ist in der Druckmaschine eingebaut und als spektraler Messkopf wird ein externes Handmessgerät verwendet. Der Vorteil der ersten beiden Anordnungen ist, dass die Messung mit beiden Einheiten voll automatisiert ausgeführt werden kann. Bei der zuletzt genannten Anordnung muss der Drucker die Messungen mit dem externen Gerät von Hand ausführen, was zeitaufwendig und fehleranfällig ist.

Der Messablauf wird im folgenden für die bevorzugte Abtastvorrichtung der Figuren 1-4 beschrieben. Für die anderen Abtastvorrichtungen oder Abtastkonfigurationen kann ein entsprechender Messablauf analog implementiert werden.

Der Drucker legt einen Druckbogen auf die Auflage unterhalb des Messbalkens und löst die Bildmessung aus. Der Messbalken wird über die Vorlage bewegt. Dabei wird mit der Bildmesseinheit die Vorlage ganz oder teilweise gemessen. Die mittels der Bildmesseinheit ohne Polarisationsfilter erfassten Bildmesswerte (die Gesamtheit der Messwerte aller Bildpunkte des Druckbogens) werden mit der Gerätefarbkalibration in Remissionswerte umgewandelt und beispielsweise in einem externen Rechner C abgespeichert. Vorzugsweise noch während des Messdurchlaufs wird der spektrale Messkopf definiert an Referenzmessstellen geführt und misst diese mit und ohne Polarisationsfilter 301 aus. Als Referenzmessstellen werden vorzugsweise die Felder des Farbmessstreifens CMS auf dem Druckbogen S verwendet. Wenn sich kein Farbmessstreifen auf dem Bogen befindet, werden mit dem spektralen Messkopf vordefinierte Positionen im Bild abgefahren und mit und ohne Polarisationsfilter gemessen. Die vom spektralen Messkopf mit und ohne Polarisationsfilter an den Referenzmessstellen erfassten Remissionsspektren dienen als Referenzwerte und werden ebenfalls auf dem Rechner C gespeichert.

In der Konfiguration, bei der die Bildmesseinheit in der Druckmaschine eingebaut ist, werden direkt die Messdaten von mehreren bedruckten Bögen während dem Druckprozess erfasst und die entsprechenden Messwerte dem externen Rechner zugeführt. Wenn der Drucker einen Bogen zieht und den Farbmessstreifen des Bogens mit dem spektralen Messkopf automatisiert oder von Hand einmisst, werden entsprechende Referenzmesswerte für die Korrektur generiert. Sie entsprechen dem aktuellen Zustand der Druckmaschine. Für eine verbesserte Auswertung können die Bildmesswerte über alle im entsprechendem Zeitraum gespeicherten Bogen gemittelt werden.

Der Vorteil der speziellen Abtastvorrichtung gemäss den Figuren 1-4 ist, dass der spektrale Messkopf 300 Referenzwerte für die Korrektur der Bildmesswerte auf dem selben Messobjekt und gleichzeitig mit der Bildmessung generiert. Es können deshalb für jedes Druckmedium präzise Korrekturwerte (Korrekturparameter) bestimmt werden. Die Genauigkeit gegenüber einem Verfahren, das nur mit vordefinierten. Werten arbeitet, wird dadurch deutlich verbessert. Die Vielfalt an verschiedenen Bedruckstoffen (Substraten, Papierqualitäten) stellt keine Limitierung mehr dar. Ausserdem wird die zeitliche Abhängigkeit der Messung vom Trockungsprozess der Farbe eliminiert. Der Einfluss von Fluoreszenz durch unterschiedliche Bewertung von optischen Aufhellern im Substrat oder durch lumineszierende Farbstoffe in der Farbschicht kann korrigiert werden. Ein weiterer Aspekt ist, dass die Berechnung der Korrekturwerte automatisch durchgeführt werden kann. Der Drucker muss keine Papierqualität mehr manuell bei der Definition der Druckparameter auswählen, was die Fehlerquote reduziert.

Für die weiter unten erläuterte Berechnung der im erfindungsgemässen Korrekturverfahren verwendeten Korrekturparameter werden mindestens Referenzwerte für eine Papierweissmessung und eine Messung auf einer bedruckten Probe (Referenzmessstelle) mit hoher Dichte mit dem spektralen Messkopf mit und ohne Polarisationsfilter benötigt. Ausserdem müssen die gleichen Messfelder bzw. Messstellen mit der Bildmesseinheit ausgemessen werden. Vorteilhaft wird aber der gesamte Farbmessstreifen mit dem spektralen Messkopf und der Bildmesseinheit gemessen, so dass Referenzwerte für jede Farbe in der Druckmaschine im Vollton und als Rastertonwert vorliegen. Details sind weiter unten ausgeführt.

Bei der bildpunktweisen Ausmessung des Messobjekts bzw. Druckbogens mit der Bildmesseinrichtung wird das Messergebnis, wie schon einleitend ausgeführt, durch verschiedene Einflussgrössen beeinflusst. Diese Einflussgrössen sind z.B. Abweichungen der Messgeometrie der Bildmesseinrichtung von der Normgeometrie, Beschaffenheit/Struktur der Oberfläche des Messobjekts und ggf. das Vorhandensein von optischen Aufhellern im Druckmedium (Fluoreszenzeffekte). Aber auch das Fehlen von Polarisationsfiltern in der Bildmesseinrichtung ist insofern als Einflussgrösse anzusehen, als dadurch ein anderes Messergebnis erzielt wird als bei Messungen unter Verwendung von Polarisationsfiltern.

Durch das erfindungsgemässe Korrekturverfahren für die mit der Bildmesseinrichtung ermittelten Bildmesswerte soll ganz allgemein der messtechnische Effekt einer oder mehrerer dieser Einflussgrössen so weit wie möglich kompensiert bzw. eliminiert werden. Das heisst konkreter, die aus der Korrektur resultierenden korrigierten Bildmesswerte sollen Bildmesswerten möglichst nahe kommen, welche unter Bedingungen gemessen werden, bei denen die Einflussgrössen nicht vorhanden sind oder keine Wirkung haben. Für den konkreten Fall der Polarisationsfilterproblematik sollen also aus den ohne Polarisationsfilter gemessenen Bildmesswerten durch die erfindungsgemässe Korrektur korrigierte Bildmesswerte berechnet werden, die mit Polarisationsfilter gemessenen Bildmesswerten entsprechen.

Bei dem beschriebenen Spektralmesskopf 300 mit Normgeometrie und Ringbeleuchtung ist die Einflussgrösse abweichende Messgeometrie nicht vorhanden. Wenn der Spektralmesskopf mit Polarisationsfilter verwendet wird, ist auch die Einflussgrösse fehlendes Polarisationsfilter nicht vorhanden. Ferner hat die Einflussgrösse Oberflächenbeschaffenheit des Druckmediums keine Wirkung. Der Spektralmesskopf ist daher ideal als Referenzmesseinrichtung geeignet.

Die erfindungsgemässe Umrechnung oder Korrektur der Bildmesswerte erfolgt beispielsweise ebenfalls im externen Rechner.

Die erfindungsgemässe Korrektur wird vorteilhaft in zwei Schritten durchgeführt, wobei jeder Schritt für sich bereits zu einer Verbesserung führt, die Kombination der beiden Schritte aber optimal und deshalb bevorzugt ist.

In einem ersten Korrekturschritt werden die Bildmesswerte und die Referenzwerte des spektralen Messkopfs ohne Polarisationsfilter aufeinander abgeglichen und dabei der medienabhängige Einfluss der Richtungsabhängigkeit und der Messgeometrie beseitigt. Die Messwerte werden so optimal an Messwerte, wie sie mit einem normgerechten Farbmessgerät ohne Polarisationsfilter gemessen werden, angepasst. Dieser Schritt kann ggf. auch eine Fluoreszenzkorrektur beinhalten, wenn der spektrale Einzelmesskopf und die Bildmesseinheit unterschiedliche Beleuchtungslichtquellen aufweisen.

In einem zweiten Korrekturschritt wird dann die Umrechnung der (ohne Polarisationsfilter ermittelten) Bildmesswerte zu Messwerten durchgeführt, welche den bei einer Messung mit Polarisationsfilter gewonnenen Messwerten entsprechen. Diese Messwerte werden im folgenden als Polarisationsfilter-(Bild)Messwerte bezeichnet.

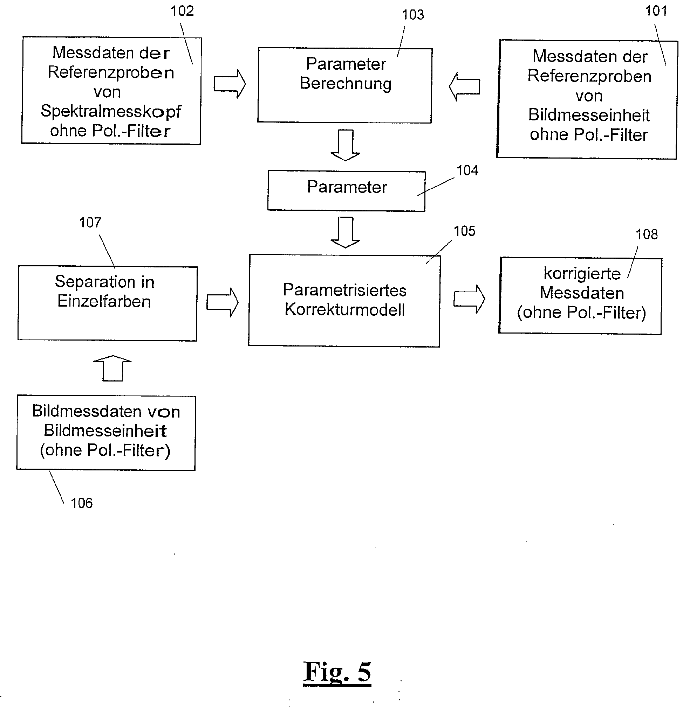

Der Ablauf des ersten Korrekturschritts ist schematisch in der Fig. 5 dargestellt. Die am Farbmessstreifen oder anderen geeigneten Referenzfeldern (ohne Polarisationsfilter) gemessenen Referenzwerte der Bildmesseinheit und des spektralen Messkopfs liegen im Rechner vor und sind in der Fig.5 durch die Blöcke 101 und 102 symbolisiert. In einer Parameterberechnungsstufe 103 werden anhand der Referenzwerte 101 und 102 der Bildmesseinheit und des Spektralmesskopfs Korrekturparameter 104 bestimmt und einem Korrekturmodell 105 zugeführt. Dieses korrigiert die (ohne Polarisationsfilter) am Bildinhalt des Druckbogens gemessenen Bildmesswerte der Bildmesseinheit (Block 106) nach vorgängiger Separation in Einzelfarben (Block 107) für jeden Bildmesspunkt und rechnet sie dabei in medium- und geometriekorrigierte Bildmesswerte 108 um, welche im Rechner abgespeichert werden. Die Berechnung der Korrekturparameter 104 und die Korrektur 105 der Bildmesswerte werden automatisch bei jeder Messung durchgeführt.

Das Korrekturmodell 105 kann mit unterschiedlicher Komplexität implementiert werden. Ein einfaches Korrekturmodell, das eine vernünftige Verbesserung ermöglicht, verwendet zwei Parameter: eine Offsetanpassung und einen Skalierungsfaktor. Der Skalierungsfaktor ist ein konstanter Wert für die Korrektur von Messgeometrieeinflüssen. Für die Korrektur von Fluoreszenzeffekten wird der Skalierungsfaktor als Kennlinienfunktion implementiert, welche abhängig vom gemessenen Remissionswert ist und spektral abhängig im Bereich der Fluoreszenzanregung angewendet wird.

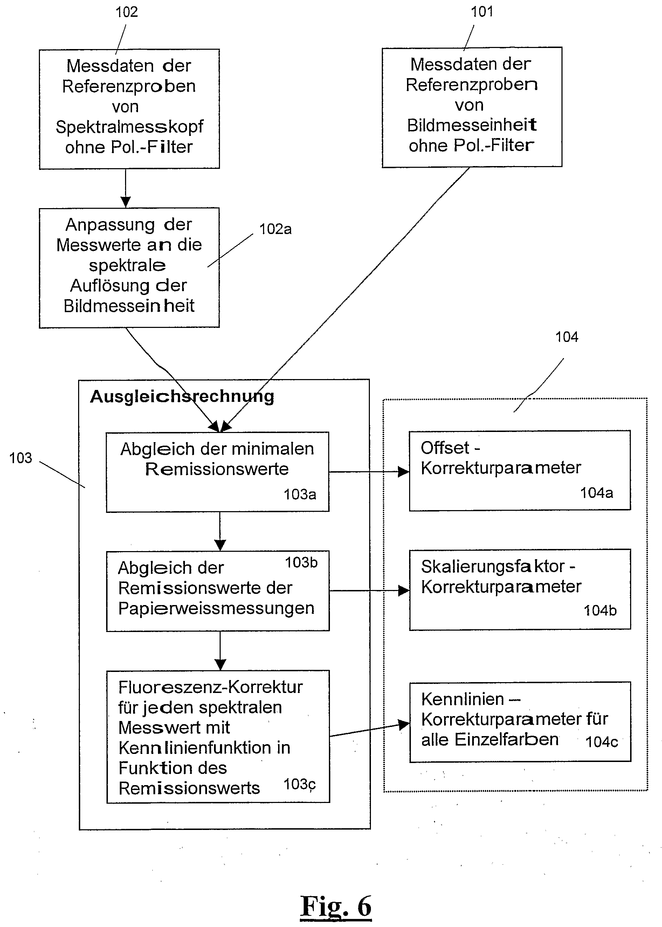

Die Figur 6 zeigt schematisch die Bestimmung der Korrekturparameter für die medienabhängigen und messgeometrischen Einflussgrössen sowie der Fluoreszenzeffekte für unpolarisierte Messwerte. Der Ablauf wird im Folgenden genauer beschrieben.

Es wird, wie anhand Fig.5 erläutert, von den am Farbmessstreifen oder anderen geeigneten Referenzmessstellen (ohne Polarisationsfilter) gemessenen Referenzwerte 101 der Bildmesseinheit und den Referenzwerten 102 des spektralen Messkopfs ausgegangen. Wenn die Bildmesseinheit Messresultate mit gegenüber dem spektralen Messkopf reduzierter spektraler Auflösung liefert, werden die Referenzwerte 102 des spektralen Messkopfs an die spektrale Auflösung der Referenzwerte 101 der Bildmesseinheit angepasst. Dies kann über eine Mittelung über das Wellenlängenintervall der entsprechenden Bildmesswerte ausgeführt werden. Die Gewichtung kann auch mittels einer spektralen Bewertungsfunktion erfolgen, die z.B. den bekannten Normalbeobachterfunktionen für CIE XYZ oder den Auswertungsfunktionen für Tristimulus-Werte oder Dichtefilter entsprechen. Diese ev. erforderliche spektrale Auflösungsanpassung ist in der Fig.6 durch den Block 102a symbolisiert.

Die Referenzwerte 101 Bildmesseinheit und die ggf. spektral angepassten Referenzwerte 102 des spektralen Messkopfs werden als Eingangsgrössen der Parameterberechnungsstufe 103 zugeführt. Diese umfasst das schon genannte Korrekturmodell und eine Ausgleichsrechnung mit den Referenzwerten als Eingangsgrössen und den zu berechnenden Korrekturparametern als Variablen.

Das Korrekturmodell selbst ist mehrfach gegliedert. Es umfasst eine Offset-Anpassung, eine Skalierung und ggf. eine Fluoreszenz- und Farbschichtkorrektur.

Bei der Offsetanpassung wird von allen Messdaten der Bildmesseinheit ein Offsetwert subtrahiert. Für die Bestimmung des Offsetwerts wird die Differenz der Referenzwerte 101 und 102 aus Referenzfeldern hoher Dichte gebildet und gemittelt. Der Mittelwert bestimmt den Offsetwert. In der Figur ist dieser Vorgang durch den Block 103a angedeutet, der resultierende Offsetwert oder Offset-Korrekturparameter ist mit 104a bezeichnet.

Bei der anschliessenden Skalierung werden alle (offsetangepassten) Bildmesswerte mit einem Skalierungsfaktor multipliziert. Der Skalierungsfaktor wird aus dem Verhältnis der beiden Papierweissmessungen bestimmt (Block 103b). Für die Korrektur wird ein mittlerer Skalierungsfaktor über alle spektralen Messwerte als Skalierungsfaktor-Korrekturparameter 104b berechnet.

Bei der späteren Anwendung des parametrisierten Korrekturmodells wird von allen Messdaten der Bildmesseinheit zuerst der Offsetwert subtrahiert, dann werden alle Bildmesswerte mit dem Skalierungsfaktor multipliziert. Dabei muss darauf geachtet werden, dass keine Werte ausserhalb des physikalisch gültigen Bereichs auftreten. Ist dies der Fall, werden die berechneten Werte auf den gültigen Bereich begrenzt.

Wenn die beiden Messsysteme (Bildmesseinheit und Referenzmesseinrichtung bzw. Spektralmesskopf) keine Unterdrückung des UV-Anteils im Beleuchtungslicht verwenden, müssen auch Fluoreszenzeffekte, welche durch unterschiedliche Anregung der optischen Aufheller im Substrat erzeugt werden, für die Korrektur berücksichtigt werden. Diese Effekte sind medienspezifisch und können mit der in den Fig.1-4 dargestellten Abtastvorrichtung charakterisiert und behoben werden.

Diese Korrektur der Fluoreszenzeffekte wird vorteilhaft auch in der ersten Korrekturstufe durchgeführt.

Für ein einfaches, industriell anwendbares Modell kann die Fluoreszenzkorrektur in den Skalierungsfaktor für den Abgleich auf Papierweiss integriert werden. In diesem Fall reicht aber ein für alle spektralen Wellenlängen gemeinsamer konstanter Korrekturwert nicht mehr aus. Die Korrektur muss für jeden spektralen Messwert im aktiven Bereich der Fluoreszenzemission unterschiedlich ausgeführt werden- Für die optischen Aufheller entspricht dies den spektralen Messwerten im Wellenlängenbereich von 420 nm bis 550 nm.

Die spektral abhängigen Skalierungsfaktoren werden durch die Division der Remissionswerte von den Papierweissmessungen mit dem spektralem Messkopf und der Bildmesseinheit im aktiven Wellenlängenbereich der Fluoreszenzanregung berechnet.

Zusätzlich muss auch der Einfluss der Farbschicht über dem Substrat berücksichtigt werden. Dies erfordert eine zusätzliche nicht-lineare Kennlinienkorrektur für jede spektrale Stützstelle im aktiven Wellenlängenbereich. Die Kennlinienkorrektur entspricht der Multiplikation der spektralen Skalierungsfaktoren auf Papierweiss mit einem zusätzlichen Faktor, der vom gemessenen Remissionswert an der jeweiligen spektralen Stützstelle abhängt. Die Kennlinie kann gleichwertig in Funktion des Remissionswerts oder des Rastertonwerts implementiert werden. Die Klennnlinienkorrektur kann z.B. durch eine Potenzfunktion F

$$ F = \left( R \right)^{\gamma}, $$

implementiert werden, wobei R für den auf eins normalisierten Remissionswert und γ für den Korrekturparameter steht.

Alternativ kann die Kennlinienfunktion auch durch eine Polynomannäherung beschrieben werden:

$$ F = c_0 + c_1 * R + c_2 * R^2 + c_3 * R^3 + \ldots, $$

wobei c0, c1, c2, c3, ... die Korrekturparameter darstellen.

Die Korrekturparameter werden mittels einer an sich bekannten Ausgleichsrechnung anhand der Referenzmesswerte 101 und 102 bestimmt. Dabei wird die Ausgleichsrechnung so geführt bzw. werden die Korrekturparameter so berechnet, dass die mit dem Korrekturmodell (unter Anwendung der Parameter) korrigierten Referenzwerte möglichst gut mit den Referenzwerten 102 übereinstimmen, z.B. in an sich bekannter Weise nach der Methode des kleinsten quadratischen Fehlers. Dieser Teil der Parameterberechnung ist in Fig. 6 durch den Block 103c symbolisiert, die entsprechenden Kennlinien-Korrekturparameter sind mit 104c bezeichnet.

Die Ausgleichsrechnung für die Berechnung der Korrekturparameter wird anhand der Messwerte von Papierweiss, von mindestens einem Rastertonwert mit nicht zu hoher Flächendeckung (<=40%) und von einer Vollton-Messung für jede Einzelfarbe durchgeführt. Wenn keine Messwerte von Rasterfeldern vorliegen, kann eine vordefinierte typische Kennlinie angenommen werden, die den relativen Verlauf zwischen Papierweissmessung und Volltonmessung beschreibt.

Wenn der Farbaufbau in einer Bildmessung bekannt ist, wird die Kennlinienkorrektur des Messwerts an einem Bildpunkt als gewichteter Mittelwert der Korrekturparameter jeder Farbe berechnet. Die Gewichtung entspricht dabei den Flächendeckungskoeffizienten der Farbe im Farbaufbau der Probe.

Der Farbaufbau in einem Bildpunkt kann aus den Vorstufendaten bekannt sein oder mit bekannten Methoden bestimmt werden. Für den Vierfarbendruck kann die Theorie von Neugebauer angewendet werden. (Hans E. J. Neugebauer "Die theoretischen Grundlagen des Mehrfarbendrucks" Zeitschrift für wissenschaftliche Photographie, Photophysik und Photochemie, 36, 1937). Dabei kann der Schwarzanteil durch einen Messwert im nahen Infrarotbereich ermittelt werden.

Wenn der Farbaufbau nicht bekannt ist, werden die Korrekturparameter aus den Mittelwerten der Korrekturparameter der verschiedenen Einzelfarben bestimmt und für die Umrechnung aller Messwerte verwendet.

Eine Fluoreszenzkorrektur kann alternativ auch mit der Verwendung eines physikalischen Modells implementiert werden. Das Modell von Kubelka-Munk mit Saunderson-Korrektur für die Oberflächeneffekte beschreibt die physikalischen Zusammenhänge beim Messen einer Farbschicht auf einem streuenden Substrat. In diesem Modell kann der diffuse Reflexionskoeffizient des Substrats in Funktion der effektiven integralen Absorption im UV Wellenlängenbereich parametrisiert werden. Eine Möglichkeit ist in der Dissertation von P. Emmel "Modèles de prediction de couleurs appliquées a l'impression jet d'encre", these N0. 1857 (1998) Ecole Polytechnique Fédérale de Lausanne, beschrieben. Dem Einfluss von Rastertonfeldern kann zusätzlich nach der Methode von H. Neugebauer Rechnung getragen werden.

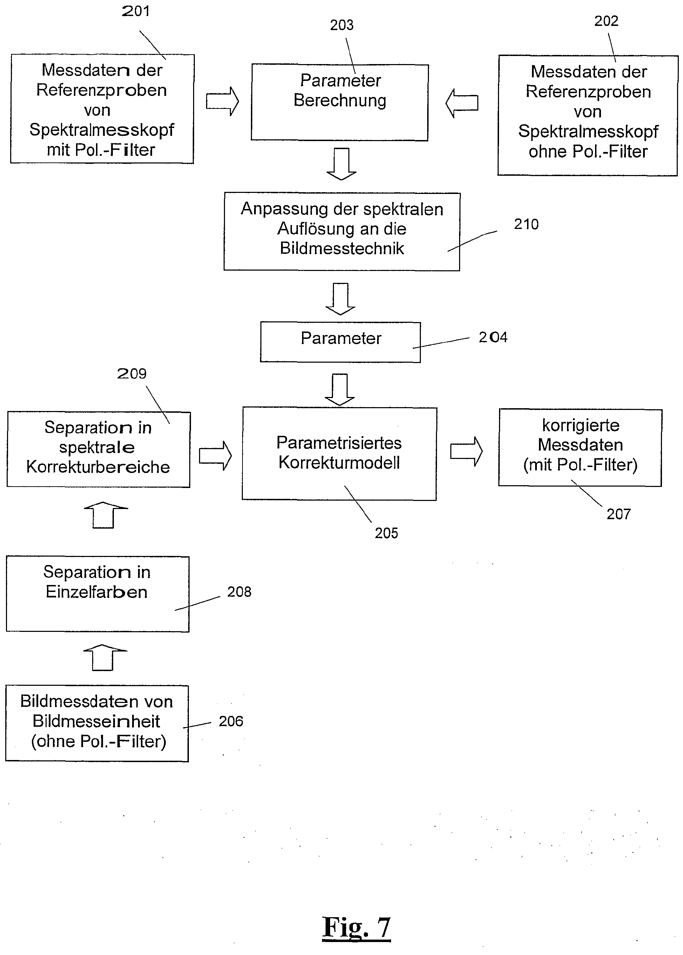

Der zweite Korrekturschritt ist die Transformation der Bildmesswerte ohne Polarisationsfilter in äquivalente Messwerte mit Polarisationsfilter (Polarisationsfilter-Messwerte). Für diese Transformation (Polarisationsfilter-Umrechnung) werden die Messwerte jedes Bildpixels mit einem parametrisierten Modell transformiert, dessen Parameter aus den mit und ohne Polarisationsfilter gemessenen Referenzspektren des spektralen Einzelmesskopfs aus ausgewählten Bildelementen bestimmt werden. Als ausgewählte Bildelemente werden typischerweise diejenigen des Farbmessstreifens CMS im Messobjekt S verwendet. Die Fig. 7 verdeutlicht diese Zusammenhänge.

Aus den mit und ohne Polarisationsfilter mit dem Spektralmesskopf ermittelten Referenzmessdaten 201 und 202 werden in einer Parameterberechnungsstufe 203 Parameter 204 für ein Korrekturmodell 205 gebildet und dem Modell zugeführt. Dieses rechnet dann die (ohne Polarisationsfilter ermittelten) Bildmessdaten 206 der Bildmesseinheit in entsprechende Polarisationsfiltermessdaten 407 um. Die Parameter werden ggf. in einer Stufe 210 an die spektrale Auflösung der Bildmesseinheit angepasst. Die Bildmessdaten 206 werden in Einzelfarben separiert (Block 208) und ferner noch in spektrale Korrekturbereiche (Block 209). Die Umrechnung in Polarisationsfiltermessdaten 207 wird automatisch bei jeder Messung durchgeführt.

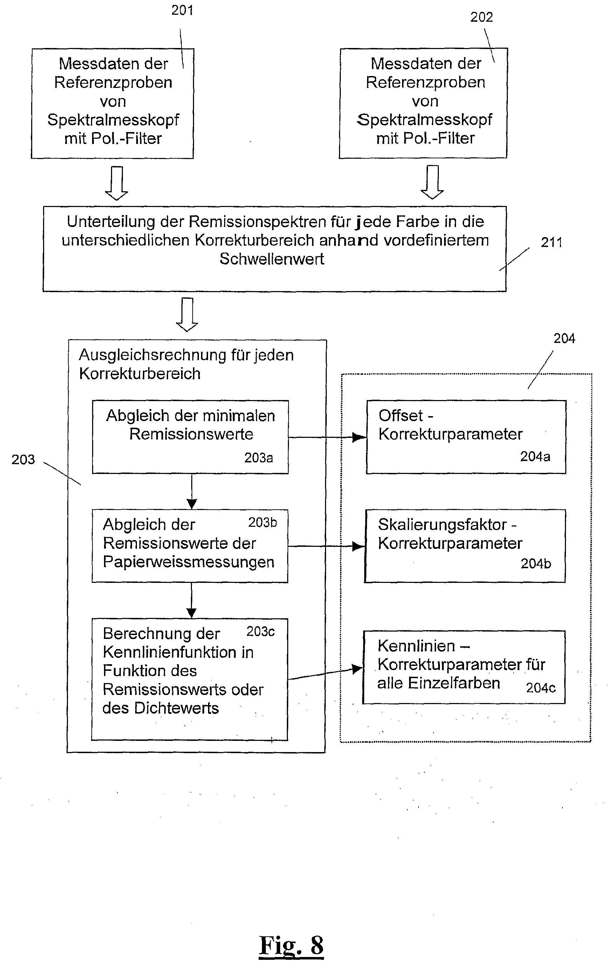

Die Berechnung der Parameter des parametrisierten Korrekturmodells 205 für die Polarisationsfilter-Umrechnung der Bilddaten ist in der Fig. 8 schematisch dargestellt und wird im folgenden näher beschrieben.

Die Korrektur auf Polarisationsfilter-Messwerte ist komplexer als die anhand der Figuren 5 und 6 erläuterten Korrektur der Medienabhängigkeit und des Messgeometrieeinflusses. Es muss für eine farbmetrische Anwendung eine spektrale Korrektur angewendet werden. Eine Korrektur mit einem pro Farbe konstantem Wert, wie sie für die Umrechnung der Dichtewerte verwendet wird, ist nicht ausreichend. Deshalb muss ein spektraler Messkopf für die Referenzmessungen zur Bestimmung der spektralen Korrekturparameter eingesetzt werden.

Für die Korrektur müssen zwei physikalische Effekte berücksichtigt werden. Erstens die Änderung der Oberflächenstruktur während dem Trocknungsprozess der Farbschicht. Diese Änderung wird mit einem Offset-Korrekturparameter im Modell berücksichtigt, der von den Remissionswerten ohne Polarisationsfilter subtrahiert wird. Der zweite Effekt betrifft den unterschiedlichen Depolarisierungsgrad des von der Probe gestreuten Messlichts. Der Depolarisierungsgrad variiert deutlich zwischen verschiedenen Substrattypen. Diese Komponente kann mit einer Skalierungsfaktor-Korrektur beschrieben werden. Der Depolarisierungsgrad wird durch die spektrale Absorption der Farbschicht beeinflusst, deshalb muss diese Korrektur abhängig vom spektralen Remissionswert oder der spektralen Dichte mit einer Kennlinienfunktion, ähnlich wie bei der oben beschriebenen Fluoreszenzkorrektur, implementiert werden. Ausserdem verhalten sich bei Rasterdruckverfahren die Kennlinien im Absorptionsbereich und im Transmissionsbereich eines Farbspektrums anders. Deshalb wird die Korrektur farbspezifisch durchgeführt. Das Spektrum jeder Farbe wird in mindestens zwei spektrale Bereiche zerlegt, für welche unterschiedliche Korrekturfaktoren bestimmt werden.

Für die Berechnung der Korrekturparameter in der Parameterberechnungsstufe liegen die Referenzmesswerte des Farbmessstreifens, welche zuvor mit dem spektralen Messkopf mit und ohne Polarisationsfilter ermittelt worden sind, im externen Rechner; sie sind wieder mit 201 und 202 bezeichnet. Die Referenzmesswerte beinhalten für jede Farbe Volltonmessungen und Rastertonmessungen sowie eine Papierweissmessung in beiden Messmodi.

Zuerst werden in einer Stufe 211 die Remissionsspektren für jede Farbe in die unterschiedlichen spektralen Korrekturbereiche unterteilt. Die Unterteilung in Absorptions- und Transmissionsbereich kann mit den Volltonspektren anhand eines Schwellenwerts, zum Beispiel eines Remissionswerts von 0.2, durchgeführt werden.

Dann wird für jeden spektralen Korrekturbereich ein Offset-Korrekturparameter 204a bestimmt. Dieser Wert wird durch die Differenz der Remissionswerte bei den spektralen Messwerten mit der höchsten Dichte bestimmt. Da der Offset-Korrekturparameter von der Messung ohne Polarisationsfilter subtrahiert wird, muss darauf geachtet werden, dass bei höheren Dichten im Bild keine Überkorrektur zu negativen Messwerten stattfinden darf. Wenn dieses Risiko besteht, wird nur eine reduzierte Komponente dieses Differenzwerts als Offset-Korrekturparameter verwendet. Die entsprechende Berechnungsstufe ist mit 203a bezeichnet.

Nach der Offset-Korrektur 203a werden die Papierweissspektren (pro spektralen Korrekturbereich) durch einen spektralen Skalierungsfaktor aufeinander abgestimmt. Der Skalierungsfaktor wird durch den Quotienten der Remissionswerte mit und ohne Polarisationsfilter gebildet und ist mit 204b bezeichnet. Die entsprechende Berechnungsstufe ist durch den Block 203b symbolisiert.

Als weiterer Schritt werden für jeden spektralen Korrekturbereich in einer Stufe 203c Kennlinien-Korrekturparameter 204c berechnet. Die Kennlinie wird im Absorptionsbereich in Funktion des Dichtewertes, d.h. in Funktion des negativen Logarithmus des Remissionswerts, parametrisiert. Im Transmissionsbereich kann die Kennlinie in Funktion des Remissionswerts oder des Dichtewerts implementiert werden. Die Kennlinienfunktion kann durch eine Potenzfunktion oder durch einen Polynom-Ansatz, wie bei der Fluoreszenzkorrektur, beschrieben werden. Die Parameter der Kennlinienfunktion werden anhand der Vollton-, Rastertonwert- und Papierweissmesswerte durch Ausgleichsrechnung bestimmt. In der Ausgleichsrechnung werden die Messwerte ohne Polarisationsfilter in die Kennlinienfunktion eingesetzt und ausgewertet. Das Ziel für die Optimierung ist das Parameterset zu bestimmen, welches die quadratischen Unterschiede zu den Referenzmesswerten mit Polarisationsfilter minimalisiert.

Das Parameterset (die Gesamtheit aller Korrekturparameter) wird bei jeder Messung auf jedem Bogen automatisch bestimmt. Fehlen charakteristische Messwerte, welche für die Bestimmung der Kennlinienkorrektur benötigt werden, wird eine vorgängig bestimmte typische Kennlinie angenommen.

Für die Umrechnung in Polarisationsfiltermesswerte gemäss Fig. 7 wird das so ermittelte Korrekturparameterset 204 dem Korrekturmodell 205 übergeben und auf die Bildmesswerte angewendet. Wenn die Bildmesswerte nicht in spektraler Form vorliegen, werden die spektralen Korrekturparameter zuerst über die entsprechenden spektralen Bereiche der einzelnen Bildmesswerte gemittelt.

Dann wird an jedem Bildpunkt der Farbaufbau bestimmt, d.h. welche Einzelfarben mit welcher Flächendeckung verwendet werden. Der Farbaufbau kann aus den Vorstufendaten übermittelt oder, wie im Zusammenhang mit der Fluoreszenzkorrektur beschrieben, aus den Messwerten berechnet werden. Anhand des Farbaufbaus werden die spektralen Korrekturparameter in den unterschiedlichen spektralen Bereichen mit den entsprechenden Flächendeckungskoeffizienten gewichtet gemittelt und auf die Bilddaten analog der Parameterberechnung angewendet. Wenn der Farbaufbau fehlt, wird aus dem spektralen Korrekturparameterset für alle Einzelfarben eine beste Mittelwertskorrektur für das Korrekturmodell ermittelt, welche dann für alle Messwerte angewendet wird.

Die erfindungsgemässe Umrechnung in Polarisationsfiltermesswerte kann auch ohne separaten Spektralmesskopf implementiert werden, wenn die Bildmesseinrichtung mit einfahrbaren Polarisationsfiltern ausgestattet ist. In diesem Fall wird der Druckbogen mit der Bildmesseinrichtung ohne Polarisationsfilter komplett eingemessen. Dann wird in die Messeinrichtung MD ein Polarisationsfilter in den Beleuchtungs- und Sammelkanal eingeschwenkt und in einem separaten speziellen Abtastgang mit ungefähr 10 mal kleinerer Abtastgeschwindigkeit nur ein Teilbereich des Bildes mit Polarisationsfilter ausgemessen. Dieser Teilbereich beinhaltet vorteilhaft den Farbkontrollstreifen CMS oder einen Teil des Farbmessstreifens. Durch die geringere Abtastgeschwindigkeit stehen die beim Einsatz von Polarisationsfiltern wegen des Lichtverlusts erforderlichen, ungefähr 10 mal längeren Messzeiten (Integrationszeiten) zur Verfügung. In diesem Fall wird also die Bildmesseinrichtung (mit eingefahrenen Polarisationsfiltern) selbst als Referenzmesseinrichtung verwendet. Die Bestimmung der Umrechnungsparameter und die Umrechnung der Messwerte erfolgt dann analog der anhand der in den Figuren 7 und 8 erläuterten Methode, wobei aber an die Stelle der vom Spektralmesskopf ermittelten Messwerte die aus dem ausgewählten Teilbereich des Bildes stammenden Messwerte der Messeinrichtung MD mit und ohne Polarisationsfilter treten. In der Fig. 4 ist ein aus zwei Teilen mit gekreuzten Polarisationsrichtungen bestehendes Polarisationsfilter symbolisch dargestellt und mit 18 bezeichnet. Die Verstellbarkeit in die Strahlengänge und aus den Strahlengängen ist durch den Pfeil 18a symbolisiert.

**Patentansprüche**

1.   Verfahren zur Korrektur von mittels einer bildpunktweise arbeitenden fotoelektrischen Bildmesseinrichtung (MD) ermittelten Bildmesswerten (106) eines Messobjekts (S) hinsichtlich mindestens einer

das Messergebnis beeinflussenden Einflussgrösse mit dem Ziel, den messtechnischen Effekt dieser mindestens einen Einflussgröße zumindest teilweise zu eliminieren, wobei die mit der Bildmesseinrichtung (MD) ermittelten Bildmesswerte (106; 206) mittels eines durch Korrekturparameter (104; 204) parametrisierten Korrekturmodells (105; 205) in korrigierte Bildmesswerte (108; 107) umgerechnet werden, die den messtechnischen Effekt der Einflussgröße gänzlich oder zumindest teilweise nicht mehr enthalten, wobei die für das parametrisierte Korrekturmodell (105; 205) verwendeten Korrekturparameter (104; 204) anhand von an ausgewählten Referenzmessstellen vorzugsweise desselben Messobjekts (S) mittels einer Referenzmesseinrichtung (300) und der Bildmesseinrichtung (MD) gemessenen Referenzmesswerten (101, 102; 201; 202) bestimmt werden, wobei eine Referenzmesseinrichtung (300) verwendet wird, bei welcher die zumindest eine Einflussgröße nicht vorhanden ist oder keinen oder nur einen vernachlässigbaren messtechnischen Effekt hat

**dadurch gekennzeichnet, dass**

als Bildmesseinrichtung (MD) eine punktweise arbeitende Messeinrichtung mit von der Norm abweichender Messgeometrie eingesetzt wird und dass die Bildmesswerte (106; 206) hinsichtlich des Einflusses der von der Norm abweichenden Messgeometrie der Bildmesseinrichtung (MD) korrigiert werden, wobei als Referenzmesseinrichtung (300) eine Messeinrichtung mit normgerechter Messgeometrie verwendet wird. wobei die normierte Messgeometrie Beleuchtungswinkel im Bereich 40[deg.] bis 50[deg.] zulässt

2.   Verfahren nach Anspruch 1, **dadurch gekennzeichnet, dass** die Korrekturparameter (104; 204) mittels einer Ausgleichsrechnung berechnet werden, die das Korrekturmodell (105; 205) enthält und die mit der Referenzmesseinrichtung (300) und der Bildmesseinrichtung (MD) gemessenen Referenzmesswerte (101, 102; 201, 202) als Eingangsgrößen und die Korrekturparameter (104; 204) als Variable verwendet, wobei die Ausgleichsrechnung so geführt und dabei die Korrekturparameter (104; 204) so berechnet werden, dass die anhand des Korrekturmodells (105; 205) korrigierten Referenzmesswerte (101) der Bildmesseinrichtung (MD) möglichst wenig von den Referenzmesswerten (102) der Referenzmesseinrichtung (300) abweichen.

3.   Verfahren nach einem der vorangehenden Ansprüche, **dadurch gekennzeichnet, dass** die Bildmesswerte (106; 206) hinsichtlich des Einflusses von Fluoreszenzeffekten (103c) korrigiert werden.

4.   Verfahren nach einem der vorangehenden Ansprüche, **dadurch gekennzeichnet, dass** als Bildmesseinrichtung (MD) eine punktweise arbeitende Messeinrichtung ohne Polarisationsfilter eingesetzt wird und dass die Bildmesswerte (106; 206) hinsichtlich des Einflusses der in der Bildmesseinrichtung (MD) fehlenden Polarisationsfilter korrigiert und dabei in Polarisationsfilter-Bildmesswerte umgerechnet werden, wobei als Referenzmesseinrichtung (300) eine Messeinrichtung mit zuschaltbaren Polarisationsfiltern (301) verwendet wird.

5. Verfahren nach Anspruch 4, **dadurch gekennzeichnet, dass** mittels der Referenzmesseinrichtung (300) an ausgewählten Referenzmessstellen vorzugsweise desselben Messobjekts (S) einmal mit und einmal ohne Polarisationsfilter (301) Referenzmesswerte (201; 202) gemessen werden und dass die für das parametrisierte Korrekturmodell (105; 205) verwendeten Korrekturparameter (104; 204) anhand dieser mit (201) und ohne (202) Polarisationsfilter (301) gemessenen Referenzmesswerte (201; 202) bestimmt werden.

6. Verfahren nach einem der Ansprüche 4 bis 5, **dadurch gekennzeichnet, dass** spektrale Korrekturbereiche festgelegt und die Bildmesswerte (106; 206) diesen spektralen Korrekturbereichen zugeordnet werden, dass für jeden spektralen Korrekturbereich separate zugeordnete Korrekturparameter berechnet werden, und dass die Bildmesswerte (106; 206) jedes spektralen Korrekturbereichs anhand der dem jeweiligen spektralen Korrekturbereich zugeordneten Korrekturparameter korrigiert werden.

7. Verfahren nach einem der vorangehenden Ansprüche, **dadurch gekennzeichnet, dass** die Bildmesswerte (106; 206) in zwei Schritten anhand je eines eigenen Korrekturmodells (105; 205) korrigiert werden.

8. Verfahren nach Anspruch 7, **dadurch gekennzeichnet, dass** in einem ersten Schritt der Einfluss der Messgeometrie der Bildmesseinrichtung (MD) und ggf. Fluoreszenzeffekte (103c) korrigiert werden und dass in einem zweiten Schritt eine Umrechnung der im ersten Schritt korrigierten Bildmesswerte (108) in Polarisationsfilter-Bildmesswerte (208) erfolgt.

9. Verfahren nach einem der vorangehenden Ansprüche, **dadurch gekennzeichnet, dass** die Bildmesswerte (106; 206) spektrale Messwerte sind.

10. Verfahren nach einem der vorangehenden Ansprüche, **dadurch gekennzeichnet, dass** bei der Berechnung der Korrekturparameter (104; 204) die spektrale Auflösung der von der Referenzmesseinrichtung (300) gemessenen Referenzmesswerte (102; 201) an die spektrale Auflösung der von der Bildmesseinrichtung (MD) gemessenen Messwerte (106; 206) angepasst wird.

11. Verfahren nach Anspruch 1, **dadurch gekennzeichnet, dass** das parametrisierte Korrekturmodell (105; 205) eine Offset-Korrektur (103a; 203a), eine Skalierung (103b; 203b) und eine spektrale Kennlinien-Korrektur (103c) umfasst.

12. Verfahren nach Anspruch 4, **dadurch gekennzeichnet, dass** das parametrisierte Korrekturmodell (105; 205) eine Offset-Korrektur (103a; 203a), eine Skalierung (103b; 203b) und eine remissions- oder dichteabhängige Kennlinien-Korrektur (203c) umfasst.

13. Verfahren nach einem der vorangehenden Ansprüche, **dadurch gekennzeichnet, dass** als Referenzmesseinrichtung (300) ein Spektralmesskopf mit normgerechter und richtungsunabhängiger Messgeometrie und mit zuschaltbaren Polarisationsfiltern (301) verwendet wird.

14. Verfahren nach einem der vorangehenden Ansprüche, **dadurch gekennzeichnet, dass** als Bildmesseinrichtung (MD) und Referenzmesseinrichtung (300) je eine Messeinrichtung mit Beleuchtungslicht ohne UV-Anteil verwendet wird.

15. Verfahren nach einem der vorangehenden Ansprüche, **dadurch gekennzeichnet, dass** eine Abtastvorrichtung verwendet wird, welche sowohl die punktweise arbeitende Bildmesseinrichtung (MD) als auch die Referenzmesseinrichtung (300) umfasst.

**Claims**

1. Method for correcting image values (106) of a measuring object (S), said image values being determined by means of a photoelectric image measuring device (MD) functioning pixel by pixel, with respect to at least one influencing factor influencing the measuring result with the aim of at least partially eliminating the metrological effect of this at least one influencing factor, wherein the image values (106; 206) determined by the image measuring device (MD) are converted into corrected image values (108; 107) by means of a correction model (105; 205) parameterised by correction parameters (104; 204), said image values completely or at least partially no longer including the metrological effect of the influencing factor, wherein the correction parameters (104; 204) used for the parameterised correction model (105; 205) are preferably ascertained by means of reference values (101, 102; 201, 202) measured at selected reference measuring points preferably of the same measuring object (S) by means of a reference measuring device (300) and the image measuring device (MD), wherein a reference measuring device (300) is used in which the at least one influencing factor is not present or has no or only a very negligible metrological effect, **characterised in that** a measuring device functioning pixel by pixel with measuring geometry deviating from the norm is used as the image measuring device (MD), and the image values (106; 206) are corrected with respect to the influence of the measuring geometry of the image measuring device (MD) deviating from the norm, wherein a measuring device having standard measuring geometry is used as the reference measuring device (300), wherein the normalised measuring geometry allows illumination angles ranging from 40[deg.] to 50[deg.].

2. Method according to claim 1, **characterised in that** the correction parameters (104; 204) are calculated by means of a compensation calculation, which contains the correction model (105; 205) and uses the reference values (101, 102; 201, 202) measured by the reference measuring device (300) and the image measuring device (MD) as input parameters and the correction parameters (104; 204) as variables, wherein the compensation calculation is guided and, here, the correction parameters (104; 204) are calculated in such a way that the reference values (101) of the image measuring device (MD), said reference values being corrected by means of the correction model (105; 205), deviate as little as possible from the reference values (102) of the reference measurement device (300).

3. Method according to one of the preceding claims, **characterised in that** the image values (106; 206) are corrected with respect to the influence of fluorescence effects (103c).

4. Method according to one of the preceding claims, **characterised in that** a measuring device functioning pixel by pixel without a polarisation filter is used as the image measuring device (MD), and the image values (106; 206) are corrected with respect to the influence of the polarisation filter lacking in the image measuring device (MD) and, here, are converted into polarisation filter image values, wherein a measuring device having switchable polarisation filters (301) is used as the reference measuring device (300).

5. Method according to claim 4, **characterised in that** reference values (201; 202) are measured once with and once without the polarisation filter (301) by means of the reference measuring device (300) at selected reference measuring points preferably of the same measuring object (S), and the correction parameters (104; 204) used for the parameterised correction model (105; 205) are ascertained by means of these reference values (201; 202) measured with (201) and without (202) the polarisation filter (301).

6. Method according to one of claims 4 to 5, **characterised in that** spectral correction regions are set, and the image values (106; 206) are allocated to these spectral correction regions, separate allocated correction parameters are calculated for each spectral correction region, and the image values (106; 206) of each spectral correction region are corrected by means of the correction parameters allocated to the respective spectral correction region.

7. Method according to one of the preceding claims, **characterised in that** the image values (106; 206) are corrected in two steps by means of a separate correction model (105; 205) in each case.

8. Method according to claim 7, **characterised in that**, in a first step, the influence of the measuring geometry of the image measuring device (MD) and, optionally, fluorescence effects (103c) are corrected, and, in a second step, a conversion of the image values (108) corrected in the first step into polarisation filter image values (208) takes place.

9. Method according to one of the preceding claims, **characterised in that** the image values (106; 206) are spectral values.

10. Method according to one of the preceding claims, **characterised in that**, during the calculation of the correction parameter (104; 204), the spectral resolution of the reference values (102; 201) measured by the reference measuring device (300) is adjusted to the spectral resolution of the values (106; 206) measured by the image measuring device (MD).

11. Method according to claim 1, **characterised in that** the parameterised correction model (105; 205) comprises an offset correction (103a; 203a), a scale (103b; 203b) and a spectral characteristic curve correction (103c).

12. Method according to claim 4, **characterised in that** the parameterised correction model (105; 205) comprises an offset correction (103a; 203a), a scale (103b; 203b) and a characteristic curve correction (203c) dependent on remission or density.

13. Method according to one of the preceding claims, **characterised in that** a spectral measuring head having normalised measuring geometry independent of direction and having switchable polarisation filters (301) is used as the reference measuring device (300).

14. Method according to one of the preceding claims, **characterised in that** a respective measuring device having illumination light without a UV component is used as the image measuring device (MD) and reference measuring device (300).

15. Method according to one of the preceding claims, **characterised in that** a scanning device is used which comprises both the image measuring device (MD) functioning pixel by pixel and the reference measuring device (300).

## Revendications

1. Procédé de correction de valeurs de mesure d'image (106) d'un objet à mesurer (S) déterminées au moyen d'un dispositif de mesures d'image (MD) photoélectrique travaillant par points d'image, par rapport à au moins une grandeur d'influence ayant un effet sur le résultat de mesure avec l'objectif d'éliminer au moins partiellement l'effet de la technique de mesure de cette au moins une grandeur d'influence, où les valeurs de mesure d'image (106 ; 206) déterminées avec le dispositif de mesure d'image (MD) sont recalculées en valeurs de mesure d'image corrigées (108 ; 107) au moyen d'un modèle de correction (105 ; 205) paramétré par des paramètres de correction (104 ; 204) qui ne contiennent plus totalement ou au moins partiellement l'effet de la technique de mesure de la grandeur d'influence, où les paramètres de correction (104 ; 204) employés pour le modèle de correction (105 ; 205) paramétré sont estimés à l'aide de valeurs de mesure de référence (101, 102 ; 201 ; 202) mesurées à des points de mesure de référence choisis de préférence du même objet à mesurer (S) au moyen d'un dispositif de mesure de référence (300) et du dispositif de mesure d'image (MD), où un dispositif de mesure de référence (300) est employé, chez lequel l'au moins une grandeur d'influence n'est pas présente ou n'a aucun effet ou uniquement un effet de technique de mesure négligeable,
**caractérisé en ce qu'**en tant que dispositif de mesure d'image (MD) un dispositif de mesure travaillant par points avec une géométrie de mesure s'écartant de la norme est employé et que des valeurs de mesure d'image (106 ; 206) sont corrigées en ce qui concerne l'influence de la géométrie de mesure déviant de la norme du dispositif de mesure d'image (MD), où, en tant que dispositif de mesure de référence (300), on emploie un dispositif de mesure avec une géométrie de mesure conforme à la norme, où la géométrie de mesure normalisée permet des angles d'éclairage dans la plage de 40 [degrés] à 50 [degrés].

2. Procédé selon la revendication 1, **caractérisé en ce que** les paramètres de correction (104 ; 204) sont calculés au moyen d'un ajustement de courbe qui contient le modèle de correction (105 ; 205) et qui emploie en tant que grandeurs de départ les valeurs de mesure de référence (101, 102 ; 201, 202) mesurées avec le dispositif de mesure de référence (300) et le dispositif de mesure d'image (MD) et en tant que variables les paramètres de correction (104 ; 204), où l'ajustement de courbe est effectué de telle manière et les paramètres de correction (104 ; 204) y sont calculés de telle manière que les valeurs de mesure de référence (101) corrigées à l'aide du modèle de correction (105 ; 205) du dispositif de mesure d'image (MD) s'écartent possiblement peu des valeurs de mesure de référence (102) du dispositif de mesure de référence (300).

3. Procédé selon l'une des revendications précédentes, **caractérisé en ce que** les valeurs de mesure d'image (106 ; 206) sont corrigées en ce qui concerne l'influence d'effets de fluorescence (103c).

4. Procédé selon l'une des revendications précédentes, **caractérisé en ce qu'**en tant que dispositif de mesure d'image (MD), on emploie un dispositif de mesure travaillant par points sans filtre de polarisation et que les valeurs de mesure d'image (106 ; 206) sont corrigées en ce qui concerne l'influence d'une absence de filtre de polarisation dans le dispositif de mesure d'image (MD) et sont ainsi recalculées en valeurs de mesure d'image de filtre de polarisation, où, en tant que dispositif de mesure de référence (300), on emploie un dispositif de mesure avec des filtres de polarisation (301) commutables.

5. Procédé selon la revendication 4, **caractérisé en ce que** des valeurs de mesure de référence (201 ; 202) sont mesurées au moyen du dispositif de mesure de référence (300) à des points de mesure de référence choisis, de préférence du même objet à mesurer (S), une fois avec et une fois sans filtre de polarisation (301) et que les paramètres de correction (104 ; 204) employés pour le modèle de correction (105 ; 205) paramétré sont déterminés à l'aide de ces valeurs de mesure de référence (201 ; 202) mesurées avec (201) et sans (202) filtre de polarisation (301).

6. Procédé selon l'une des revendications 4 à 5, **caractérisé en ce que** des zones de correction spectrale sont mises en place et les valeurs de mesure d'image (106 ; 206) sont associées à ces zones de correction spectrale de sorte que des paramètres de correction spectrale séparés sont calculés pour chaque zone de correction spectrale et que les valeurs de mesure d'image (106 ; 206) de chaque zone de correction spectrale sont corrigées à l'aide des paramètres de correction associés à la zone de correction spectrale respective.

**7.** Procédé selon l'une des revendications précédentes, **caractérisé en ce que** les valeurs de mesure d'image (106 ; 206) sont corrigées en deux étapes à l'aide d'un modèle de correction (105 ; 205) propre respectif.

**8.** Procédé selon la revendication 7, **caractérisé en ce que**, dans une première étape, l'influence de la géométrie de mesure du dispositif de mesure d'image (MD), et éventuellement, les effets de fluorescence (103c), sont corrigés, et que, dans une deuxième étape, il y a un recalcul des valeurs de mesure d'image (108) corrigées dans la première étape en valeurs de mesure d'image de filtre de polarisation (208).

**9.** Procédé selon l'une des revendications précédentes, **caractérisé en ce que** les valeurs de mesure d'image (106 ; 206) sont des valeurs de mesure spectrale.

**10.** Procédé selon l'une des revendications précédentes, **caractérisé en ce que**, lors du calcul des paramètres de correction (104 ; 204), la résolution spectrale des valeurs de mesure de référence (102 ; 201) mesurées par le diapositif de mesure de référence (300) est ajustée à la résolution spectrale des valeurs de mesure (106 ; 206) mesurées par le dispositif de mesure d'image (MD).

**11.** Procédé selon la revendication 1, **caractérisé en ce que** le modèle de correction (105 ; 205) paramétré comprend une correction d'offset (103a ; 203a), une mise à l'échelle (103b ; 203b) et une correction de caractéristiques spectrales (103c).

**12.** Procédé selon la revendication 4, **caractérisé en ce que** le modèle de correction (105 ; 205) paramétré comprend une correction d'offset (103a ; 203a), une mise à l'échelle (103b ; 203b) et une correction de caractéristiques dépendantes d'une réémission ou de la densité (203c).

**13.** Procédé selon l'une des revendications précédentes, **caractérisé en ce qu'**une tête de mesure spectrale avec une géométrie de mesure conforme à la norme et indépendante de la direction et dotée des filtres de polarisation (301) commutables est employée en tant que dispositif de mesure de référence (300).

**14.** Procédé selon l'une des revendications précédentes, **caractérisé en ce qu'**en tant que dispositif de mesure d'image (MD) et que dispositif de mesure de référence (300), on emploie chaque fois un diapositif de mesure avec de la lumière d'éclairage sans UV.

**15.** Procédé selon l'une des revendications précédentes, **caractérisé en ce qu'**un dispositif de balayage est employé, lequel comprend à la fois le dispositif de mesure d'image (MD) travaillant par points et le dispositif de mesure de référence (300).

**Fig. 1**

**Fig. 2**

MC

A5

300   ⊖ 301

MD   A4

A3

x

y

## Fig. 3

## Fig. 4

11

12

21

22

31

11

31

31

12

11

12

15

13

21a

18

z

x

y

11a

16

S

18a

102

| Messdaten der<br>Referenzproben<br>von<br>Spektralmesskopf<br>ohne Pol.-Filter |

103

| Parameter<br>Berechnung |

101

| Messdaten der<br>Referenzproben<br>von<br>Bildmesseinheit<br>ohne Pol.-Filter |

104

| Parameter |

107

| Separation in<br>Einzelfarben |

105

| Parametrisiertes<br>Korrekturmodell |

108

| korrigierte<br>Messdaten<br>(ohne Pol.-Filter) |

| Bildmessdaten von<br>Bildmesseinheit<br>(ohne Pol.-Filter) |

106

**Fig. 5**

102

101

Messdaten der
Referenzproben
von
Spektralmesskopf
ohne Pol.-Filter

Messdaten der
Referenzproben
von
Bildmesseinheit
ohne Pol.-Filter

Anpassung der
Messwerte an die
spektrale
Auflösung der
Bildmesseinheit

102a

104

Ausgleichsrechnung

103

Abgleich der minimalen
Remissionswerte

103a

Offset -
Korrekturparameter

104a

Abgleich der
Remissionswerte der
Papierweissmessungen

103b

Skalierungsfaktor -
Korrekturparameter

104b

Fluoreszenz-Korrektur
für jeden spektralen
Messwert mit
Kennlinienfunktion in
Funktion des
Remissionswerts

103c

Kennlinien –
Korrekturparameter für
alle Einzelfarben

104c

**Fig. 6**

201

Messdaten der
Referenzproben
von
Spektralmesskopf
mit Pol.-Filter

203

Parameter
Berechnung

202

Messdaten der
Referenzproben
von
Spektralmesskopf
ohne Pol.-Filter

Anpassung der spektralen
Auflösung an die
Bildmesstechnik

210

Parameter

204

209

Separation in
spektrale
Korrekturbereiche

Parametrisiertes
Korrekturmodell

korrigierte
Messdaten
(mit Pol.-Filter)

207

205

Separation in
Einzelfarben

208

Bildmessdaten von
Bildmesseinheit
(ohne Pol.-Filter)

206

**Fig. 7**

201

Messdaten der
Referenzproben
von
Spektralmesskopf
mit Pol.-Filter

202

Messdaten der
Referenzproben
von
Spektralmesskopf
mit Pol.-Filter

Unterteilung der Remissionspektren für jede Farbe in die
unterschiedlichen Korrekturbereich anhand vordefiniertem
Schwellenwert

211

Ausgleichsrechnung für jeden
Korrekturbereich

204

Abgleich der minimalen
Remissionswerte

203a

203

Offset -
Korrekturparameter

204a

Abgleich der          203b
Remissionswerte der
Papierweissmessungen

Skalierungsfaktor -
Korrekturparameter

204b

Berechnung der         203c
Kennlinienfunktion in
Funktion des
Remissionswerts oder
des Dichtewerts

Kennlinien –
Korrekturparameter für
alle Einzelfarben      204c

# Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1213569 A2
- US 6028682 A
- DE 19650223 A
- EP 1094309 A

**In der Beschreibung aufgeführte Nicht-Patentliteratur**

- **HANS E. J. NEUGEBAUER.** Die theoretischen Grundlagen des Mehrfarbendrucks. *Zeitschrift für wissenschaftliche Photographie, Photophysik und Photochemie,* 1937, vol. 36
- **P. EMMEL.** *Modèles de prediction de couleurs appliquées a l'impression jet d'encre,* 1998